(19) Europäisches Patentamt
European Patent Office
Office européen des brevets

(11) EP 4 733 356 A1

(12) EUROPEAN PATENT APPLICATION
published in accordance with Art. 153(4) EPC

(43) Date of publication:
29.04.2026 Bulletin 2026/18

(21) Application number: 24825826.1

(22) Date of filing: 14.06.2024

(51) International Patent Classification (IPC):
*C08L 33/12* (2006.01) *C08F 212/08* (2006.01)
*C08F 220/18* (2006.01) *C08K 5/49* (2006.01)
*C08K 5/372* (2006.01) *C08L 25/14* (2006.01)
*C08L 51/00* (2006.01)

(52) Cooperative Patent Classification (CPC):
**C08F 212/08; C08F 220/18; C08K 5/372; C08K 5/49; C08L 25/14; C08L 33/12; C08L 51/00**

(86) International application number:
PCT/JP2024/021639

(87) International publication number:
WO 2024/262423 (26.12.2024 Gazette 2024/52)

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
GE KH MA MD TN

(30) Priority: 20.06.2023 JP 2023100520
29.08.2023 JP 2023138673

(71) Applicant: Kuraray Co., Ltd.
Kurashiki-shi, Okayama 710-0801 (JP)

(72) Inventors:
- NOMOTO, Yusaku
Tainai-shi, Niigata 959-2691 (JP)
- MATSUMURA, Atsushi
Tainai-shi, Niigata 959-2691 (JP)
- MATSUI, Tomoyuki
Tainai-shi, Niigata 959-2691 (JP)
- NAGASAKI, Tatsuya
Tainai-shi, Niigata 959-2691 (JP)

(74) Representative: Müller-Boré & Partner
Patentanwälte PartG mbB
Friedenheimer Brücke 21
80639 München (DE)

# (54) METHACRYLIC RESIN COMPOSITION, METHOD FOR PRODUCING SAME, AND MOLDED BODY

(57) The present disclosure provides a methacrylic resin composition which has excellent heat resistance, excellent heat decomposition resistance (thermal stability), and excellent moldability, and of which the discoloration (e.g., yellowing) is suppressed. A methacrylic resin composition according to the present disclosure contains a first methacrylic copolymer (A) consisting of 10 to 99 mass% of a methyl methacrylate unit, 1 to 40 mass% of at least one type of isopropenyl aromatic compound unit (UI), and 0 to 60 mass% of at least one type of other unit (UO), has a glass transition temperature of 120 to 150°C, and further contains 1 to 1,000 ppm of at least one type of organic disulfide compound (D), in which a total remaining amount of raw material monomers of the methacrylic copolymer (A) is 0 to 1.00 mass%.



Processed by Luminess, 75001 PARIS (FR)

## Description

### Technical Field

The present disclosure relates to a methacrylic resin composition, its manufacturing method, and a molded article.

### Background Art

Methacrylic resin such as polymethyl methacrylate (PMMA) has excellent transparency, abrasion resistance, moldability, and the like, and is widely used as materials for: optical members such as light guiding plates and lenses; components for vehicles such as automobiles (such as materials for interiors of vehicles and materials for exteriors of vehicles); and various types of members such as those for buildings, household articles, OA apparatuses, and lighting apparatuses.

Depending on the use, methacrylic resins are required to have heat resistance.

For example, in the case of the backlights of liquid crystal displays including a light source and a light guide plate, as the optical paths of light guide plates are becoming longer and their functions such as luminance are increasing improved, the use of high-power light-emitting diodes (LEDs) (e.g., LEDs having an output of 1 W or higher) as a light source is increasing. In general, it is desirable that the light-emitting surface of LEDs and the light-entering side end face of the light guide plate are as close as possible in order to prevent light from leaking from the light-entering side end face of the light guide plate. However, in particular, in the case where high-power LEDs, which generate a large amount of heat, are used, the closer the light-emitting surface of the LEDs and the light-entering end face of the light guide plate are to each other, the more the light-entering end face of the light guide plate is exposed to the heat generated from the LEDs. Therefore, the light guide plate is required to have higher heat resistance.

As one of methacrylic resins having improved heat resistance, a methacrylic copolymer containing a methyl methacrylate (MMA) unit and an isopropenyl aromatic compound unit such as an α-methylstyrene (αMSt) unit is known. For example, Patent Literature 1 discloses a method for manufacturing a methacrylic copolymer, in which a monomer mixture containing methyl methacrylate (MMA) and α-methylstyrene (αMSt) is subjected to bulk polymerization by adding, as a polymerization initiator, a polyfunctional organic peroxide having a 10 hour half-life temperature within a range of 60 to 110°C (Claim 1).

### Citation List

### Patent Literature

Patent Literature 1: Japanese Unexamined Patent Application Publication No. H4-218515
Patent Literature 2: Japanese Unexamined Patent Application Publication No. H3-281648
Patent Literature 3: Japanese Unexamined Patent Application Publication No. H7-292202
Patent Literature 4: Japanese Unexamined Patent Application Publication No. H6-345932
Patent Literature 5: Japanese Unexamined Patent Application Publication No. H5-279547
Patent Literature 6: Japanese Unexamined Patent Application Publication No. 2001-294722
Patent Literature 7: Japanese Unexamined Patent Application Publication No. 2013-104042

## Summary of Invention

### Technical Problem

However, a methacrylic copolymer containing an MMA unit and an isopropenyl aromatic compound unit such as an αMSt unit tends to have a relatively low thermal decomposition temperature. Therefore, for a methacrylic resin composition containing this copolymer, there is a risk that the copolymer thermally decomposes when it is heated and melted such as during the manufacturing of the resin and during the molding process, and the amount of remaining monomers in the resin increases, so that the heat resistance deteriorates. Further, if the residence time in the heated and melted state increases during the manufacturing of the resin and during the molding process, an appearance defect such as foaming may occur due to the thermal decomposition of the methacrylic copolymer.

As a method for improving the heat decomposition resistance of the above-described methacrylic copolymer, methods for adding various antioxidants have been proposed. For example, each of Patent Literatures 2 and 3 discloses a

methacrylic resin composition obtained by adding, as antioxidants, a hindered phenol-based compound and a phosphite-based compound to a methacrylic copolymer containing an MMA unit and an αMSt unit (Claim 1 of Patent Literature 2 and Claim 1 of Patent Literature 3).
Patent Literature 4 discloses a methacrylic resin composition obtained by adding, as antioxidants, a phenol-acrylate bifunctional compound and a hindered phenol-based compound to a methacrylic copolymer containing an MMA unit and an αMSt unit (Claim 1 of Patent Literature 4).

The antioxidants used in Patent Literatures 2 and 3 cannot effectively trap alkyl radicals generated by the thermal decomposition of the main chain of the methacrylic copolymer containing an MMA unit and an isopropenyl aromatic compound unit such as an αMSt unit, so that it cannot be said that their effects for improving the heat decomposition resistance are sufficient. Although the antioxidants used in Patent Literature 4 have an ability to trap alkyl radicals, the effect for improving the heat decomposition resistance is insufficient. Further, the resin may be discolored (e.g., yellowing) when the amount of the additives is increased.

Examples of rubber-reinforced styrene-based resins include high-impact polystyrene (HIPS resin), methyl-butadiene-styrene methacrylate resin (MBS resin), and acrylonitrile-butadiene-styrene resin (ABS resin). These rubber-reinforced styrene-based resins have transparency, and have excellent mechanical properties, moldability, electrical properties, colorability, and design properties, so that they are used in various uses such as: miscellaneous goods; housing and parts for electrical and OA equipment; and interior and exterior members of vehicles.

In general, rubber-reinforced styrene-based resins have excellent impact resistance, but their heat resistance tends to be insufficient. It is possible to improve the heat resistance without impairing the transparency by mixing, to the rubber-reinforced styrene-based resin, a heat-resistant (meth)acrylic resin having a refractive index that matches the refractive index of the rubber-reinforced styrene-based resin.

For example, Patent Literature 5 discloses a thermoplastic resin composition containing a graft copolymer (rubber-reinforced transparent resin) obtained by graft-copolymerizing methyl methacrylate and styrene onto diene-based rubber or acrylic rubber, and an α-methylstyrene-methyl methacrylate copolymer (Claim 1).

Patent Literature 6 discloses a thermoplastic resin composition containing a rubber-modified thermoplastic resin and a heat-resistant (meth)acrylic copolymer containing a methacrylate unit and a maleimide unit (Claim 1).

Patent Literature 7 discloses a rubber-modified styrene-based resin composition containing a graft copolymer consisting of a diene-based rubber polymer and a styrene-methacrylate copolymer, and a (meth)acrylic copolymer consisting of a (meth)acrylate unit, an aromatic vinyl-based monomer unit, and an unsaturated dicarboxylic anhydride unit (Claim 1).

However, in general, heat-resistant (meth)acrylic resins tend to have high melt viscosity. Therefore, in a methacrylic resin composition containing a rubber-reinforced styrene-based resin and a heat-resistant (meth)acrylic resin, it is necessary to set its temperature to a relatively high temperature when it is heated and melted such as during the melting and kneading of a plurality of types of resins and during the molding the resin composition. In this case, gelation may occur due to the thermal degradation of the rubber-reinforced styrene-based resin. This problem can occur especially when the rubber-reinforced styrene-based resin contains a butadiene unit. The gelation is undesirable because it may cause a decrease in impact resistance at low temperatures (e.g., below freezing) and an appearance defect or the like of a molded article.

The present disclosure has been made in view of the above-described circumstances, and an object thereof is to provide a methacrylic resin composition which has excellent heat resistance, excellent heat decomposition resistance (thermal stability), and excellent moldability, and of which the discoloration (e.g., yellowing) is suppressed.

Further, another object of the present disclosure is to provide a methacrylic resin composition which contains a graft copolymer containing a butadiene unit, and a methacrylic copolymer, and has excellent transparency, heat resistance, surface hardness, and impact resistance at normal temperatures and low temperatures.

**Solution to Problem**

The present disclosure provides methacrylic resin compositions, methods for manufacturing such methacrylic resin compositions, and molded articles specified in the shown below Items [1] to [15].

[1] A methacrylic resin composition containing a first methacrylic copolymer (A) consisting of 10 to 99 mass% of a methyl methacrylate unit, 1 to 40 mass% of at least one type of isopropenyl aromatic compound unit (UI), and 0 to 60 mass% of at least one type of other unit (UO), and having a glass transition temperature of 120 to 150°C,

further containing 1 to 1,000 ppm of at least one type of organic disulfide compound (D), in which
a total remaining amount of raw material monomers of the methacrylic copolymer (A) is 0 to 1.00 mass%.

[2] The methacrylic resin composition described in Item [1], containing:

10 to 95 mass% of a first methacrylic copolymer (A) consisting of 10 to 99 mass% of a methyl methacrylate unit, 1 to 40 mass% of at least one type of isopropenyl aromatic compound unit (UI), and 0 to 60 mass% of at least one type of other units (UO), and having a glass transition temperature of 120 to 150°C;
5 to 40 mass% of a graft copolymer (B) obtained by graft-copolymerizing a methacrylic copolymer (M) containing 10 to 90 mass% of a methyl methacrylate unit, 90 to 10 mass% of an aromatic vinyl compound unit, and 49 to 0 mass% of a vinyl cyanide compound unit onto a butadiene-based rubber-like polymer (BR) containing 60 to 100 mass% of a butadiene unit;
0 to 85 mass% of a second methacrylic copolymer (C) containing 10 to 90 mass% of a methyl methacrylate unit, 70 to 10 mass% of an aromatic vinyl compound unit other than the isopropenyl aromatic compound unit, and 49 to 0 mass% of a vinyl cyanide compound unit; and
1 to 1,000 ppm of an organic disulfide compound (D), in which
the methacrylic resin composition satisfies shown below Formula (1),

$$0 \leq |n_b - n_m| \leq 0.01 \cdots (1)$$

in the above-shown formula, $n_m$ is defined by shown below Formula (2),

$$n_m = (n_a \times w_a + n_c \times w_c)/(w_a + w_c) \cdots (2)$$

in the above-shown formula, $n_a$, $n_b$, and $n_c$ are refractive indices of the first methacrylic copolymer (A), the graft copolymer (B), and the second methacrylic copolymer (C), respectively, for a sodium D line at 23°C, and $w_a$, $w_b$, and $w_c$ are ratios of masses of the first methacrylic copolymer (A), the graft copolymer (B), and the second methacrylic copolymer (C), respectively, to a total mass of the first methacrylic copolymer (A), the graft copolymer (B), and the second methacrylic copolymer (C) in the methacrylic resin composition, where $w_a + w_b + w_c = 1$.

[3] The methacrylic resin composition described in Item [1] or [2], in which the at least one type of isopropenyl aromatic compound unit (UI) includes an α-methylstyrene unit.
[4] The methacrylic resin composition described in any one of Items [1] to [3], in which the first methacrylic copolymer (A) contains, as the other unit (UO), an aromatic vinyl compound unit other than the isopropenyl aromatic compound unit.
[5] The methacrylic resin composition described in any one of Items [1] to [4], in which the first methacrylic copolymer (A) contains, as the other unit (UO), at least one type of ring structure unit (UR) selected from the group consisting of an acid anhydride unit, an imide unit having a ring structure, and a lactone ring unit.
[6] The methacrylic resin composition described in Item [2], in which the butadiene-based rubber-like polymer (BR) is at least one type of rubber-like polymer selected from the group consisting of polybutanediene, a copolymer containing a butadiene unit and an aromatic vinyl compound unit, and hydrogen additives thereof.
[7] The methacrylic resin composition described in Item [2] or [6], in which the graft copolymer (B) is core shell-type graft copolymer particles in which surfaces of at least some of core particles made of the butadiene-based rubber-like polymer (BR) are coated with a shell layer made of the methacrylic copolymer (M).
[8] The methacrylic resin composition described in any one of Items [1] to [7], in which the at least one type of organic disulfide compound (D) includes at least one type selected from the group consisting of di-tert-dodecyl disulfide (DDS) and dibenzyl disulfide (DBS).
[9] The methacrylic resin composition described in any one of Items [1] to [8], further containing 0.0001 to 1.0 mass% of at least one type of organophosphate compound (P).
[10] The methacrylic resin composition described in any one of Items [1] to [9], further containing 1,000 to 5,000 ppm of at least one type of lubricant (L).
[11] The methacrylic resin composition described in any one of Items [1] to [10], in which a haze value of a 3 mm thick plate made of the methacrylic resin composition measured in accordance with JIS K7136 is 0 to 10%.
[12] The methacrylic resin composition described in any one of Items [1] to [11], in which 1% thermal weight loss temperature measured by performing a thermogravimetric analysis under an inert gas atmosphere is 270°C or higher.
[13] A method for manufacturing a methacrylic resin composition described in any one of Items [1] to [12], including:

a step (S1-1) of preparing a polymerization raw material containing a plurality of types of raw material monomers including methyl methacrylate and at least one type of isopropenyl aromatic compound (I), and a polymerization initiator;
a step (S1-2) of polymerizing the polymerization raw material under a condition that a polymerization conversion rate is 30 to 60 mass%, and thereby obtaining a resin solution containing a first methacrylic copolymer (A) or a

precursor resin thereof; and

a step (S1-3) of volatilizing and removing at least a part of the raw material monomers present in the resin solution in one step or over a plurality of steps, in which

at least one type of organic disulfide compound (D) is added to at least one of the polymerization raw material, the resin solution obtained after completion of the step (S1-2), and the resin solution for which the step (S1-3) is being performed so that the at least one type of organic disulfide compound (D) is present in an amount of 1 to 1,000 ppm in the finally-obtained methacrylic resin composition.

[14] The method for manufacturing a methacrylic resin composition describe in Item [13], in which the at least one type of organic disulfide compound (D) is added at least to the polymerization raw material, among the polymerization raw material, the resin solution obtained after completion of the step (S1-2), and the resin solution for which the step (S1-3) is being performed.

[15] A molded article containing a methacrylic resin composition described any one of Items [1] to [12].

## Advantageous Effects of Invention

According to the present disclosure, it is possible to provide a methacrylic resin composition which has excellent heat resistance, excellent heat decomposition resistance (thermal stability), and excellent moldability, and of which the discoloration (e.g., yellowing) is suppressed.

Further, according to the present disclosure, it is possible to provide a methacrylic resin composition which contains a graft copolymer containing a butadiene unit, and a methacrylic copolymer, and has excellent transparency, heat resistance, surface hardness, and impact resistance at normal temperatures and low temperatures.

## Description of Embodiments

In this specification, unless otherwise specified, a "unit" contained in a polymer is a repetitive unit contained in the polymer, and is a monomer unit derived from a raw material monomer or a derived unit derived from at least one type of monomer unit.

In this specification, (meth)acryl is a generic term for acryl and methacryl, and the same applies to (meth) acrylonitrile and the like.

[Methacrylic Resin Composition]

A methacrylic resin composition according to the present disclosure contains at least one type of first methacrylic copolymer (A) consisting of 10 to 99 mass% of a methyl methacrylate (MMA) unit, 1 to 40 mass% of at least one type of isopropenyl aromatic compound unit (UI), and 0 to 60 mass% of at least one type of other units (UO).

The content of the methacrylic copolymer (A) (the total amount in the case of a plurality of types) in the methacrylic resin composition according to the present disclosure is not limited to any particular values, and is preferably from 10 to 99.9999 mass%.

The total remaining amount of raw material monomers of the methacrylic copolymer (A) in the methacrylic resin composition according to the present disclosure is 0 to 1.00 mass%.

The methacrylic resin composition according to the present disclosure contains 1 to 1,000 ppm of at least one type of organic disulfide compound (D).

The methacrylic resin composition according to the present disclosure can further contain at least one type of optional component as required.

The methacrylic resin composition according to the present disclosure can contain, as an optional component(s), at least one type of graft copolymer (B) obtained by graft-copolymerizing a methacrylic copolymer (M) containing 10 to 90 mass% of a methyl methacrylate (MMA) unit, 90 to 10 mass% of at least one type of aromatic vinyl compound unit, and 49 to 0 mass% of at least one type of vinyl cyanide compound unit onto a butadiene-based rubber-like polymer (BR) containing 60 to 100 mass% of a butadiene unit.

The methacrylic resin composition according to the present disclosure can contain, as an optional component(s), at least one type of a second methacrylic copolymer (C) containing 10 to 90 mass% of a methyl methacrylate (MMA) unit, 70 to 10 mass% of an aromatic vinyl compound unit other than the isopropenyl aromatic compound unit, and 49 to 0 mass% of a vinyl cyanide compound unit.

In the methacrylic resin composition according to the present disclosure, the content of the first methacrylic copolymer (A) can be 10 to 95 mass%; the content of the graft copolymer (B) can be 5 to 40 mass%; and the content of the second methacrylic copolymer (C) can be 0 to 85 mass%.

(Organic Disulfide Compound (D))

The methacrylic resin composition according to the present disclosure contains 1 to 1,000 ppm of at least one type of organic disulfide compound (D) as an additive(s). The lower limit value is preferably 10 ppm, more preferably 20 ppm, still more preferably 50 ppm, still more preferably 70 ppm, still more preferably 80 ppm, still more preferably 100 ppm, still more preferably 150 ppm, particularly preferably 200 ppm, and most preferably 250 ppm. The upper limit value is preferably 900 ppm, more preferably 800 ppm, still more preferably 750 ppm, still more preferably 700 ppm, still more preferably 650 ppm, still more preferably 600 ppm, particularly preferably 550 ppm, and most preferably 500 ppm.

As described in the [Technical Problem] section, in general, a methacrylic copolymer containing an MMA unit and an isopropenyl aromatic compound unit (UI) such as an αMSt unit tends to have a relatively low thermal decomposition temperature. Therefore, for a methacrylic resin composition containing this copolymer, there is a risk that the copolymer thermally decomposes when it is heated and melted such as during the manufacturing of the resin and during the molding process, and the amount of remaining monomers in the resin increases, so that the heat resistance deteriorates. Further, if the residence time in the heated and melted state increases during the heating and melting of the resin such as during the manufacturing of the resin and during the molding process, an appearance defect such as foaming may occur due to the thermal decomposition of the methacrylic copolymer.

It is known that, in general, an isopropenyl aromatic compound such as αMSt has a low ceiling temperature, which is a temperature at which the polymerization reaction rate becomes equal to the depolymerization reaction rate. For example, the ceiling temperature of αMSt is 61°C. In general, a copolymer containing a monomer unit containing a methyl group at an α-position of an MMA unit or the like, and an isopropenyl aromatic compound unit can suppress the isopropenyl aromatic compound chain in which repetitive units of an isopropenyl aromatic compound are connected side by side by performing the polymerization at a temperature higher than the ceiling temperature of the isopropenyl aromatic compound. However, it still tends to contain this chain in a certain amount. Because depolymerization-type decomposition which starts from this isopropenyl aromatic compound chain occurs when it is heated and melted such as during the manufacturing of the resin and during the molding process, the methacrylic copolymer containing an MMA unit and an isopropenyl aromatic compound unit (UI) such as an αMSt unit tends to have a relatively low thermal decomposition temperature. It is inferred that when an appropriate amount of the organic disulfide compound (D) is present when it is heated and melted such as during the manufacturing of the resin and during the molding process, a thiyl radical generated by the disconnection of the disulfide bond stabilizes the alkyl radical generated by the depolymerization, which starts from the isopropenyl aromatic compound chain, so that the heat decomposition resistance is remarkably improved.

Further, as described in the [Technical Problem] section, in general, a heat-resistant (meth)acrylic resin tends to have high melt viscosity. Therefore, in a methacrylic resin composition containing a rubber-reinforced styrene-based resin and a heat-resistant (meth)acrylic resin, it is necessary to set its temperature to a relatively high temperature during the heating and melting of the resin such as during the melting and kneading of a plurality of types of resins and during the molding the resin composition. In this case, gelation may occur due to the thermal degradation of the rubber-reinforced styrene-based resin. This problem can occur especially when the rubber-reinforced styrene-based resin contains a butadiene unit. It is considered that gelation occurs due to the cross-linking reaction between alkyl radicals when they are heated to a high temperature. The gelation is undesirable because it may cause a decrease in impact resistance at low temperatures (e.g., below freezing) and an appearance defect of a molded article.

In the methacrylic resin composition containing an appropriate amount of the organic disulfide compound (D) according to the present disclosure, the thermal decomposition of the methacrylic copolymer (A) is effectively suppressed by the presence of the appropriate amount of the organic disulfide compound (D) during the manufacturing of the resin. As a result, it is possible to stably manufacture a methacrylic resin composition of which the amount of remaining monomers is small and which has excellent heat resistance and excellent heat decomposition resistance (thermal stability).

Further, owing to the presence of the appropriate amount of the organic disulfide compound (D), it is possible to, during the manufacturing of the resin, relatively easily control the copolymerization of the isopropenyl aromatic compound (I), stably manufacture a methacrylic copolymer (A) of which the composition such as the content of the isopropenyl aromatic compound unit (UI) is uniform, and stably manufacture a methacrylic copolymer (A) having excellent heat resistance and excellent mechanical properties such as excellent rigidity and excellent surface hardness.

A methacrylic resin composition containing an appropriate amount of the organic disulfide compound (D) according to the present disclosure has excellent heat resistance and heat decomposition resistance (thermal stability) because the presence of the appropriate amount of the organic disulfide compound (D) effectively suppresses the thermal decomposition of the methacrylic copolymer (A) even when the resin is heated and melted such as during the molding process after the manufacturing of the resin.

In the methacrylic resin composition containing an appropriate amount of the organic disulfide compound (D) according to the present disclosure, an appearance defect such as foaming due to the thermal decomposition of the methacrylic copolymer (A) is suppressed, and discoloration (e.g., yellowing), a unpleasant odor, and the like are suppressed even when the residence time in the heated and melted state increases during the manufacturing of the

resin and during the molding process.

In the methacrylic resin composition containing the methacrylic copolymer (A), the graft copolymer (B), and an appropriate amount of the organic disulfide compound (D) according to the present disclosure, the thermal degradation and the thermal decomposition of each copolymer can be effectively suppressed by the presence of the appropriate amount of the organic disulfide compound (D) when the resin composition is heated and melted such as during the manufacturing thereof and during the molding process thereof.

The thermal degradation of the graft copolymer (B) containing the butadiene unit can be suppressed by the appropriate amount of the organic disulfide compound (D), and the gelation of the graft copolymer (B) containing the butadiene unit can be effectively suppressed when the resin composition is heated and melted such as during the manufacturing thereof and during the molding process thereof. Since the thermal degradation of the graft copolymer (B) containing the butadiene unit and the resulting gelation thereof are effectively suppressed, it is possible to stably manufacture a methacrylic resin composition excellent in impact resistance at normal temperatures (20 to 25°C) and low temperatures (e.g., below freezing). Further, even when the residence time in the heated and melted state increases when the resin composition is heated and melted such as during the manufacturing thereof and during the molding process, it is possible to suppress the appearance defect due to foaming caused by the thermal decomposition of the copolymers and due to gelation of the graft copolymer (B) containing the butadiene unit, and thereby to suppress the discoloration (e.g., yellowing), a unpleasant odor, and the like when the resin composition is heated and melted such as during the manufacturing thereof and during the molding process thereof.

It is considered that the organic disulfide compound (D) can effectively suppress the thermal decomposition of each copolymer because thiyl radicals generated by the disconnection of disulfide bonds effectively trap alkyl radicals generated by the thermal decomposition of each copolymer.

For the above-described reason, the methacrylic resin composition containing the methacrylic copolymer (A) and an appropriate amount of the organic disulfide compound (D) according to the present disclosure, and a molded article containing this methacrylic resin composition can be excellent in heat resistance and heat decomposition resistance (thermal stability), excellent in mechanical properties such as rigidity and surface hardness, excellent in moldability, and excellent in appearance and the like.

Further, the methacrylic resin composition containing the methacrylic copolymer (A), the graft copolymer (B), and an appropriate amount of the organic disulfide compound (D) the present disclosure, and a molded article containing this methacrylic resin composition can be excellent in heat resistance and heat decomposition resistance (thermal stability), excellent in surface hardness and mechanical properties such as impact resistance at normal temperatures and low temperatures, excellent in moldability, and excellent in appearance and the like.

Examples of organic disulfide compounds (D) include dialkyl disulfide compounds such as diethyl disulfide, di-n-propyl disulfide, di-n-butyl disulfide, di-sec-butyl disulfide, di-tert-butyl disulfide, din-amyl disulfide, di-tert-amyl disulfide, di-tert-hexyl disulfide, di-n-octyl disulfide, di-tert-octyl disulfide, di-n-dodecyl disulfide, di-tert-dodecyl disulfide (DDS), di-n-stearine disulfide, ethyl-n-propyl disulfide, ethyl-tert-butyl disulfide, ethyl-sec-butyl disulfide, and n-propyl-isopropyl disulfide; aromatic disulfide compounds such as diphenyl disulfide, dibenzyl disulfide (DBS), and di-p-tolyl disulfide; cyclic disulfide compounds such as ditrimethylene disulfide, ditetramethylene disulfide, and dicyclohexyl disulfide; amino group-containing disulfide compounds such as cystine and diaminodiphenyl disulfide; disulfides of carboxylic acids or their derivatives such as dithiodicrycholic acid, dithiodipropionic acid, and dithiodicrychol acid-2-ethylhexyl; and disulfide compounds containing an unsaturated bond such as diallyl disulfide. Among them, dialkyl disulfide compounds and/or aromatic disulfide compounds are preferred. In view of the disconnection temperature of the disulfide bond, di-tert-alkyl disulfides such as di-tert-dodecyl disulfide (DDS) are preferred as the dialkyl disulfide compound. Dibenzyl disulfide (DBS) and the like are preferred as the aromatic disulfide compound.

The timing at which the organic disulfide compound (D) is added is not limited to any particular time, and may be arbitrary determined, such as before, during, or after the polymerization of the first methacrylic copolymer (A), the graft copolymer (B), or the second methacrylic copolymer (C), or during the manufacturing of the methacrylic resin composition.

(First Methacrylic Copolymer (A))

The methacrylic resin composition according to the present disclosure contains at least one type of first methacrylic copolymer (A). The first methacrylic copolymer (A) contains a methyl methacrylate (MMA) unit and at least one type of isopropenyl aromatic compound unit (UI), and can further contain at least one type of other units (UO).

The content of the MMA unit in the first methacrylic copolymer (A) is 10 to 99 mass%. The lower limit value is preferably 20 mass%, more preferably 30 mass%, still more preferably 40 mass%, still more preferably 50 mass%, still more preferably 55 mass%, particularly preferably 60 mass%, and most preferably 65 mass%. The upper limit value is preferably 95 mass%, more preferably 90 mass%, particularly preferably 85 mass%, and most preferably 80 mass%.

The content of the at least one type of isopropenyl aromatic compound unit (UI) (the total amount in the case of a plurality of types, unless otherwise specified) in the first methacrylic copolymer (A) is 1 to 40 mass%. The lower limit value is

preferably 5 mass%, more preferably 10 mass%, and particularly preferably 15 mass%. The upper limit value is preferably 35 mass%, more preferably 30 mass%, particularly preferably 25 mass%, and most preferably 20 mass%.

When the content of the isopropenyl aromatic compound unit (UI) is less than the aforementioned lower limit value, the heat resistance of the first methacrylic copolymer (A) may be insufficient. When the content of the isopropenyl aromatic compound units (UI) exceeds the aforementioned upper limit value, the polymerization property, the heat decomposition resistance, and the moldability of the first methacrylic copolymer (A) may deteriorate. When the content of the isopropenyl aromatic compound unit (UI) exceeds the aforementioned upper limit value, the control of the copolymerization of the isopropenyl aromatic compound (I) becomes difficult, so that it may become difficult to stably manufacture a first methacrylic copolymer (A) of which the composition such as the content of the isopropenyl aromatic compound unit (UI) is uniform. Variations in the composition such as the content of the isopropenyl aromatic compound unit (UI) may cause a deterioration in heat resistance and a deterioration in mechanical properties such as rigidity and surface hardness.

When the content of the MMA unit and the content of the isopropenyl aromatic compound unit (UI) are within the above-described respective ranges, the first methacrylic copolymer (A) can have excellent transparency, excellent heat resistance, excellent heat decomposition resistance, an excellent polymerization property, and excellent moldability. Further, when the content of the MMA unit and the content of the isopropenyl aromatic compound unit (UI) are within the above-described respective ranges, it is possible to easily control the copolymerization of the isopropenyl aromatic compound (I) of the first methacrylic copolymer (A), stably manufacture a first methacrylic copolymer (A) of which the composition such as the content of the isopropenyl aromatic compound unit (UI) is uniform, and stably manufacture a first methacrylic copolymer (A) having excellent heat resistance and excellent mechanical properties such as excellent rigidity and excellent surface hardness.

The first methacrylic copolymer (A) is obtained by copolymerizing methyl methacrylate (MMA), at least one type of isopropenyl aromatic compound (I) and, when necessary, at least one type of other monomers (O).

Examples of isopropenyl aromatic compounds (I) include alkyl-substituted isopropenylbenzenes such as isopropenylbenzene ($\alpha$-methylstyrene ($\alpha$MSt)), isopropenylnaphthalene, isopropenyltoluene, isopropenylethylbenzene, isopropenylpropylbenzene, isopropenylbutylbenzene, isopropenylpentylbenzene, isopropenylhexylbenzene, and isopropenyloctylbenzene.

In view of the availability of raw materials and the like, the at least one type of isopropenyl aromatic compound (I) preferably contains at least one type of alkyl-substituted isopropenylbenzene, and particularly preferably contains isopropenylbenzene ($\alpha$-methylstyrene ($\alpha$MSt)).

Examples of other monomers (O) include vinyl-based monomers (V) having one polymerizable unsaturated bond in one molecule other than the methyl methacrylate (MMA) and the isopropenyl aromatic compound (I).

Examples of vinyl-based monomers (V) include (meth)acrylic acid esters other than the MMA such as methyl acrylate; (meth)acrylic acid alkyl esters such as ethyl (meth)acrylate, propyl (meth)acrylate, butyl (meth)acrylate, and 2-ethyl hexyl (meth)acrylate; (meth)acrylic acid aryl esters such as phenyl (meth)acrylate; and (meth)acrylic acid cycloalkyl esters such as cyclohexyl (meth)acrylate and norbornenyl (meth)acrylate.

Other examples of vinyl-based monomers (V) include (meth)acrylic acid, (meth)acrylamide, and (meth)allylonitrile.

Other examples of vinyl-based monomers (V) include aromatic vinyl compounds other than the isopropenyl aromatic compound (I) such as styrene (St); alkyl-substituted styrenes such as o-, m-, or p-methylstyrene, 2,4-dimethylstyrene, 2,5-dimethylstyrene, 3,4-dimethylstyrene, 3,5-dimethylstyrene, o-, m-, or p-ethylstyrene; and1,1-diphenylethylene. In view of the melt fluidity, the productivity, and the like of the first methacrylic copolymer (A), styrene (St) and the like are preferred.

The first methacrylic copolymer (A) can contain, as at least one type of other units (UO), as an alternative or in addition to an aromatic vinyl compound unit other than the isopropenyl aromatic compound unit, at least one type of ring structural unit (UR) selected from the group consisting of an acid anhydride unit, an imide unit having a ring structure, and a lactone ring unit. The methacrylic copolymer (A) containing the ring structural unit (UR) has high heat resistance, and hence is preferred.

The first methacrylic copolymer (A) having no ring structural unit (UR) in the main chain can be manufactured by copolymerizing a monomer mixture containing methyl methacrylate (MMA) and at least one type of isopropenyl aromatic compound (I), and when required, at least one type of other monomers (O) by a known method.

Examples of methods for manufacturing a first methacrylic copolymer (A) having a ring structural unit (UR) in the main chain include a method for copolymerizing a plurality of types of monomers including raw material monomers for a methyl methacrylate (MMA), at least one type of isopropenyl aromatic compound (I), and a ring structural unit (UR), and when required, other monomers by a known method; and a method in which after copolymerizing a methacrylic copolymer containing an MMA unit and at least one type of isopropenyl aromatic compound unit (UI), and having no ring structural unit (UR) by a known method, a ring structural unit (UR) is formed by introducing a ring structure into the main chain.

Examples of methods for polymerizing a methacrylic copolymer include radical polymerization methods such as a (continuous) bulk polymerization method, a suspension polymerization method, a solution polymerization method, and

an emulsion polymerization method; and an anionic polymerization method and the like.

The content of the ring structural unit (UR) (the total amount in the case of a plurality of types, unless otherwise specified) in the first methacrylic copolymer (A) is 0 to 60 mass%. The lower limit value is preferably 5 mass%. The upper limit value is preferably 55 mass%, more preferably 50 mass%, still more preferably 40 mass%, particularly preferably 30 mass%, and most preferably 20 mass%.

Examples of acid anhydride units include a maleic anhydride (Mah) unit, a glutaric anhydride unit, and an itaconic anhydride unit, and the maleic anhydride (Mah) unit and the like are preferred.

Examples of imide units having a ring structure include an unsubstituted or N-substituted glutarimide unit, and an unsubstituted or N-substituted maleimide unit.

The glutarimide (GI) unit is a unit having an unsubstituted or N-substituted 2,6-dioxopiperidinediyl structure, and examples include units represented by shown below General Formula (I).

[Formula 1]

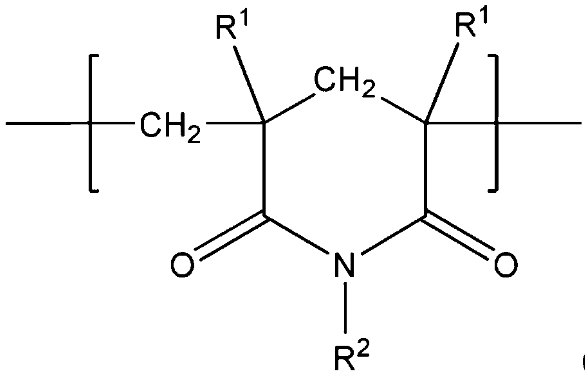

(I)

In Formula (I), two $R^1$ are each independently a hydrogen atom or a methyl group, and it is preferred that both the two $R^1$ are methyl groups. $R^2$ is a hydrogen atom, an alkyl group having a carbon number of 1 to 18, a cycloalkyl group having a carbon number of 3 to 12, or an organic group containing an aromatic ring and having a carbon number of 6 to 15, and preferably a hydrogen atom, a methyl group, an n-butyl group, a cyclohexyl group, or a benzyl group, more preferably a methyl group, an n-butyl group, or a cyclohexyl group, and particularly preferably a methyl group.

The first methacrylic copolymer (A) containing the glutarimide (GI) unit can have properties such as a high glass transition temperature (Tg), excellent impact resistance, and excellent size and shape stability against changes in the temperature.

The first methacrylic copolymer (A) containing the glutarimide (GI) unit can be manufactured by any of known methods such as those disclosed in International Patent Publication No. WO 2005/108438, Japanese Unexamined Patent Application Publication No. 2010-254742, Japanese Unexamined Patent Application Publication No. 2008-273140, and Japanese Unexamined Patent Application Publication No. 2008-274187.

Examples of methods for manufacturing a first methacrylic copolymer (A) containing a glutarimide (GI) unit include a method including an imide cyclization reaction step in which an imidizing agent is added to a precursor resin containing two methyl methacrylate (MMA) units adjacent to each other and thereby making them react to each other. Examples of imidizing agents include ammonia; aliphatic hydrocarbon group-containing amines such as methylamine (also referred to as monomethylamine), ethylamine, diethylamine, n-propylamine, isopropylamine, n-butylamine, isobutylamine, t-butylamine, and n-hexylamine; aromatic hydrocarbon group-containing amines such as aniline, toluidine, trichloroaniline, and n-methylbenzylamine; alicyclic hydrocarbon group-containing amines such as cyclohexylamine and n-methylcyclohexylamine; and urea compounds such as urea, 1,3-dimethylurea, 1,3-diethylurea, and 1,3-dipropylurea. Among them, methylamine and the like are preferred.

The unsubstituted or N-substituted maleimide unit is a unit having an unsubstituted or N-substituted 2,5-pyrrolidinedione structure, and examples include a unit represented by shown below Formula (II) (also referred to as a maleimide unit (II)).

[Formula 2]

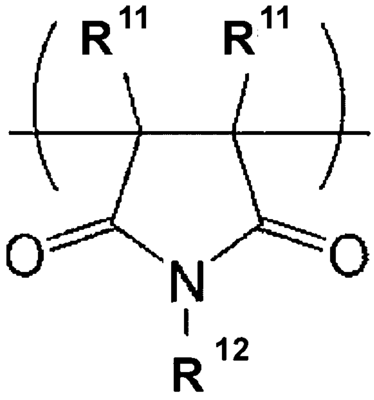

(II)

In Formula (II), two $R^{11}$ are each independently a hydrogen atom or a methyl group, and it is preferred that both the two $R^{11}$ are methyl groups. $R^{12}$ is a hydrogen atom, an alkyl group having a carbon number of 1 to 18, a cycloalkyl group having a carbon number of 3 to 12, or an organic group containing an aromatic ring and having a carbon number of 6 to 15, and preferably a methyl group, an n-butyl group, a cyclohexyl group, or a benzyl group, more preferably a methyl group, an n-butyl group, or a benzyl group, and particularly preferably a methyl group.

Examples of methods for manufacturing a first methacrylic copolymer (A) containing a maleimide unit include a method for polymerizing a monomer mixture containing a monomer containing a maleimide unit; and a method for reacting a maleic anhydride unit contained in a polymerization reaction product of a monomer mixture containing a maleic anhydride with an imidizing agent. For the latter method, refer to Japanese Published Examined Application No. S61-026924, Japanese Published Examined Application No. H7-042332, Japanese Published Examined Application No. H9-100322, Japanese Published Examined Application No. 2001-329021, and so on.

Examples of monomers containing a maleimide unit include N-alkylmaleimides such as N-methylmaleimide, N-ethylmaleimide, N-butylmaleimide, and N-cyclohexylmaleimide (ChMI); and N-arylmaleimides such as N-phenylmaleimide (PhMI), N-methylphenylmaleimide, and N-chlorphenylmaleimide. N-cyclohexylmaleimide (ChMI), N-phenylmaleimide (PhMI), and the like are preferred.

The lactone ring unit is a unit containing a >CH-O-C(=O)- group in the ring structure. The number of elements constituting the ring of the unit containing the >CH-O-C(=O)- group in the ring structure is preferably 4 to 8, more preferably 5 or 6, and most preferably 6. Examples of units containing the >CH-O-C(=O)- group in the ring structure include lactone diyl units such as a β-propiolactone diyl unit, a γ-butyrolactone diyl unit, and a δ-valerolactone diyl unit. Note that ">C" in the formula means that the carbon atom C has two bonds.

Examples of the δ-valerolactone diyl unit include a unit represented by shown below Formula (III) (also referred to as a lactone ring unit (III)).

[Formula 3]

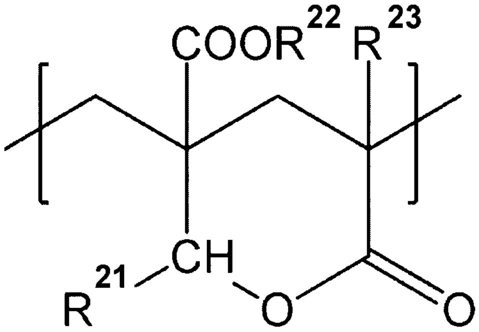

(III)

In Formula (III), $R^{21}$, $R^{22}$, and $R^{23}$ are each independently a hydrogen atom or an organic group having a carbon number of 1 to 20, preferably a hydrogen atom or an organic group having a carbon number of 1 to 10, and more preferably a hydrogen atom or an organic group having a carbon number of 1 to 5. Note that the organic group is not limited to any particular groups as long as it has a carbon number of 1 to 20, and examples include a linear or branched alkyl group, a linear or branched aryl group, a $-OCOCH_3$ group, and a -CN group. The organic group may contain a heteroatom such as an oxygen atom. $R^{22}$ is preferably a methyl group, and $R^{21}$ and $R^{23}$ are preferably hydrogen atoms.

The lactone ring unit can be obtained by intramolecular cyclization of a hydroxy group and an ester group, for example, by intramolecular cyclization of a 2-(hydroxyalkyl) acrylate unit and a methyl (meth)acrylate unit. Refer to Japanese Unexamined Patent Application Publication No. 2000-230016, Japanese Unexamined Patent Application Publication No. 2001-151814, Japanese Unexamined Patent Application Publication No. 2002-120326, Japanese Unexamined Patent Application Publication No. 2002-254544, and Japanese Unexamined Patent Application Publication No. 2005-146084.

The glutaric anhydride unit is a unit having a 2,6-dioxodihydropyrandiyl structure, and examples include a unit represented by Formula (IV) (also referred to as a glutaric anhydride unit (IV)).

[Formula 4]

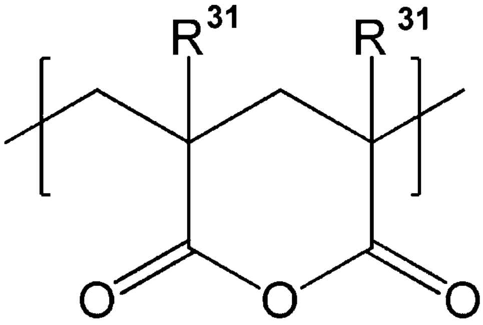

(IV)

In Formula (IV), two $R^{31}$ are each independently a hydrogen atom or an alkyl group having a carbon number of 1 to 5, and preferably a methyl group.

The glutaric anhydride unit can be obtained by intramolecular cyclization of two (meth)acrylic acid units adjacent to each other, or intramolecular cyclization or the like of a (meth)acrylic acid unit and a methyl (meth) acrylate unit. Refer to Japanese Unexamined Patent Application Publication No. 2007-197703 and Japanese Unexamined Patent Application Publication No. 2010-96919.

The weight-average molecular weight (Mw) of the first methacrylic copolymer (A) is not limited to any particular values, and is preferably 40,000 to 400,000. The lower limit value is more preferably 50,000, and particularly preferably 60,000. The upper limit value is more preferably 300,000, and particularly preferably 200,000. When Mw is equal to or larger than the aforementioned lower limit value, the first methacrylic copolymer (A) has excellent mechanical properties. Further, when Mw is equal to or smaller than the aforementioned upper limit value, the first methacrylic copolymer (A) has excellent melt flowability and excellent moldability.

In this specification, unless otherwise specified, the "weight-average molecular weight (Mw)" is a weight-average molecular weight in terms of standard polymethyl methacrylate (PMMA) determined by a gel permeation chromatography (GPC) analysis using a differential refractive index detector.

The molecular weight distribution (Mw/Mn) of the first methacrylic resin (A) is not limited to any particular values, and is preferably 1.5 to 2.5. The lower limit value is more preferably 1.8, and the upper limit value is more preferably 2.3. When Mw/Mn is equal to or higher than the aforementioned lower limit value, the methacrylic resin (A) tends to have excellent melt flowability and excellent moldability. Further, when Mw/Mn is equal to or lower than the aforementioned upper limit value, the methacrylic resin (A) tends to have excellent mechanical properties such as excellent impact resistance and excellent tenacity.

The glass transition temperature (Tg) of the first methacrylic copolymer (A) is preferably 120°C or higher. The lower limit value is preferably 123°C, more preferably 125°C, and particularly preferably 130°C. The upper limit value is not limited to any particular values, and is, for example, 150°C. The higher the Tg is, the higher the heat resistance of the first methacrylic copolymer (A) becomes, and hence the more it is preferred. A molded article containing a first methacrylic copolymer (A) having a high Tg is preferred because it is less likely to cause deformation and/or shrinkage due to the heat.

In this specification, the "glass transition temperature (Tg)" can be measured in accordance with JIS K7121 by a method described in the [Example] section described later.

The methacrylic resin (A), and the methacrylic resin composition containing the methacrylic copolymer (A) and an appropriate amount of the organic disulfide compound (D) according to the present disclosure can have excellent moldability. For the moldability, a melt flow rate (MFR) can be used as an index. The MFR of the methacrylic resin (A), and that of the methacrylic resin composition containing the methacrylic copolymer (A) and an appropriate amount of the organic disulfide compound (D) according to the present disclosure are preferably 1 to 20 g/10 min in view of the stability of the heating, melting, and molding. The lower limit value is more preferably 2 g/10 min, and particularly preferably 3 g/10 min. The upper limit value is more preferably 15 g/10 min, and particularly preferably 10 g/10 min.

In this specification, unless otherwise specified, the MFR of a methacrylic resin (composition) is a value

measured by using a melt indexer at a temperature of 230°C under a load of 3.8 kg according to JIS K7210.

The content of the first methacrylic copolymer (A) in the methacrylic resin composition according to the present disclosure is preferably from 10 to 99.9999 mass% in view of the heat resistance, the surface hardness, and the like. The lower limit value is more preferably 15 mass%, still more preferably 20 mass%, still more preferably 30 mass%, particularly preferably 40 mass%, and most preferably 50 mass%. The upper limit value can be 99.9 mass%, 99.5 mass%, 99 mass%, 98 mass%, 97 mass%, 96 mass%, 95 mass%, 92 mass%, 90 mass%, 88 mass%, or 85 mass%.

The methacrylic resin composition according to the present disclosure contains at least one type of organic disulfide compound (D). The timing at which the organic disulfide compound (D) is added is not limited to any particular timings.

The methacrylic resin composition according to the present disclosure is preferably an organic disulfide compound-added methacrylic copolymer (AD) containing the first methacrylic copolymer (A) and the organic disulfide compound (D), or can contain it.

(Total Remaining Amount of Raw Material Monomer)

In the methacrylic resin composition according to the present disclosure, at least a part of at least one type of raw material monomers for the methacrylic copolymer (A) (specifically, the methyl methacrylate (MMA), the at least one type of isopropenyl aromatic compound (I), and the at least one type of other monomers (O), which is contained as required) could remain unreacted.

The methacrylic resin composition according to the present disclosure contains 1 to 1,000 ppm of at least one type of organic disulfide compound (D). In the method for manufacturing a methacrylic resin composition according to the present disclosure, at least one type of organic disulfide compound (D) can be added to the polymerization raw material and/or an intermediate product so that the at least one type of organic disulfide compound (D) is present in an amount of 1 to 1,000 ppm in the finally-obtained methacrylic resin composition according to the present disclosure. According to the methacrylic resin composition and its manufacturing method in accordance with the present disclosure, the thermal decomposition of the methacrylic copolymer (A) during the manufacturing of the resin is effectively suppressed, and the amount of remaining monomers in the resin is effectively reduced. As a result, the deterioration of the heat resistance of the methacrylic resin composition due to the presence of the remaining monomers can be effectively suppressed. Since the thermal decomposition of the methacrylic copolymer (A) can be effectively suppressed by using a small amount of the organic disulfide compound (D), the discoloration (e.g., yellowing) of the methacrylic resin composition, which would otherwise be caused by the addition of the organic disulfide compound (D), can be suppressed.

In the methacrylic resin composition according to the present disclosure, the total remaining amount of raw material monomers of the methacrylic copolymer (A) is 0 to 1.00 mass%. The upper limit value of the total remaining amount of the raw material monomers is preferably 0.80 mass%, more preferably 0.75 mass%, still more preferably 0.70 mass%, still more preferably 0.65 mass%, still more preferably 0.60 mass%, particularly preferably 0.55 mass%, and most preferably 0.50 mass%.

The amount of methyl methacrylate (MMA) remaining in the methacrylic resin composition according to the present disclosure is 0 to 1.00 mass%. The upper limit value is preferably 0.80 mass%, more preferably 0.70 mass%, still more preferably 0.60 mass%, still more preferably 0.50 mass%, still more preferably 0.40 mass%, still more preferably 0.30 mass%, particularly preferably 0.20 mass%, and most preferably 0.10 mass%.

The content of the isopropenyl aromatic compound (I) remaining in the methacrylic resin composition according to the present disclosure (the total amount in the case of a plurality of types) is 0 to 1.00 mass%. The upper limit value is preferably 0.80 mass%, more preferably 0.70 mass%, still more preferably 0.60 mass%, still more preferably 0.50 mass%, still more preferably 0.40 mass%, particularly preferably 0.30 mass%, and most preferably 0.20 mass%.

The content of the other monomers (O) remaining in the methacrylic resin composition according to the present disclosure (the total amount in the case of a plurality of types) is 0 to 1.00 mass%. The upper limit value is preferably 0.80 mass%, more preferably 0.70 mass%, still more preferably 0.60 mass%, still more preferably 0.50 mass%, still more preferably 0.40 mass%, still more preferably 0.30 mass%, particularly preferably 0.20 mass%, and most preferably 0.10 mass%.

In this specification, unless otherwise specified, the "weight-average molecular weight (Mw)" is a weight-average molecular weight in terms of standard polymethyl methacrylate (PMMA) determined by a gel permeation chromatography (GPC) analysis using a differential refractive index detector. Similarly, the "number-average molecular weight (Mn)" is a number-average molecular weight in terms of standard polymethyl methacrylate (PMMA) determined by a gel permeation chromatography (GPC) analysis using a differential refractive index detector.

(Graft Copolymer (B))

The methacrylic resin composition according to the present disclosure can contain at least one type of graft

copolymer (B) as an optional component(s). The graft copolymer (B) is obtained by graft-copolymerizing a methacrylic copolymer (M) onto a butadiene-based rubber-like polymer (BR) which contains a butadiene unit and can further contain at least one type of other units. The methacrylic copolymer (M) contains a methyl methacrylate (MMA) unit and at least one type of aromatic vinyl compound unit. The methacrylic copolymer (M) can further contain at least one type of vinyl cyanide compound unit and further contain at least one type of other units.

The content of the butadiene unit in the butadiene-based rubber-like polymer (BR) is 60 to 100 mass%. The lower limit value is preferably 65 mass% and more preferably 70 mass%. In the present disclosure, even when a graft copolymer (B) containing a larger amount of a butadiene unit is used, the gelation during the heating and melting can be effectively suppressed.

The content of the MMA unit in the methacrylic copolymer (M) is 10 to 90 mass%. The lower limit value is preferably 20 mass%, more preferably 30 mass%, particularly preferably 40 mass%, and most preferably 50 mass%. The upper limit value is preferably 85 mass%, and more preferably 80 mass%.

The content of at least one type of aromatic vinyl compound unit (the total amount in the case of a plurality of types, unless otherwise specified) in the methacrylic copolymer (M) is 90 to 10 mass%. The lower limit value is preferably 15 mass%, and more preferably 20 mass%. The upper limit value is preferably 80 mass%, more preferably 70 mass%, particularly preferably 60 mass%, and most preferably 50 mass%.

The content of at least one type of vinyl cyanide compound unit (the total amount in the case of a plurality of types, unless otherwise specified) in the methacrylic copolymer (M) is 49 to 0 mass%. The upper limit value is preferably 45 mass%, more preferably 40 mass%, particularly preferably 35 mass%, and most preferably 30 mass%.

The content of at least one type of other monomer units (the total amount in the case of a plurality of types, unless otherwise specified) in the methacrylic copolymer (M) is not limited to any particular values, and is preferably 0 to 5 mass%.

When the contents of the MMA unit, the aromatic vinyl compound unit, and the vinyl cyanide compound unit in the methacrylic copolymer (M) are within the above-described respective ranges, the methacrylic copolymer (M) can have excellent heat resistance and excellent polymerization property. It is possible to relatively easily control the copolymerization of the aromatic vinyl compound unit, so it is easy to obtain a methacrylic copolymer (M) of which the composition such as the content of the aromatic vinyl compound unit is uniform.

Examples of other units other than the butadiene unit that can be contained in the butadiene-based rubber-like polymer (BR) include conjugated diene compound units other than the butadiene unit, an aromatic vinyl compound unit, and a vinyl cyanide compound unit.

Conjugated diene compounds other than butadiene are not limited to any particular compounds, and examples include isoprene, 2,3-dimethyl-1,3-butadiene, 1,3-pentadiene, and 1,3-hexadiene.

Preferred examples of aromatic vinyl compounds, vinyl cyanide compounds, and other monomers are the same as those for a second methacrylic copolymer (C) (which will be described later).

The butadiene-based rubber-like polymer (BR) may be a hydrogen additive in which at least a part of at least one type of conjugated diene compound unit including the butadiene unit is hydrogenated.

The butadiene-based rubber-like polymer (BR) can be at least one type of rubber-like polymer selected from the group consisting of polybutadiene, a copolymer containing a butadiene unit and an aromatic vinyl compound unit (preferably a styrene unit), a copolymer containing a butadiene unit and a vinyl cyanide compound (preferably an acrylonitrile unit), and hydrogen additives thereof.

The content of the butadiene-based rubber-like polymer (BR) in the graft copolymer (B) is not limited to any particular values, and is preferably 40 to 80 mass%. The upper limit value is more preferably 55 mass%.

The content of the methacrylic copolymer (M) in the graft copolymer (B) is not limited to any particular values, and is preferably 60 to 20 mass%. The lower limit value is more preferably 45 mass%.

When the content of the butadiene-based rubber-like polymer (BR) in the graft copolymer (B) is equal to or larger than the aforementioned lower limit value, the graft copolymer (B) and the methacrylic resin composition containing this graft copolymer (B) according to the present disclosure can have excellent impact resistance.

When the content of the methacrylic copolymer (M) in the graft copolymer (B) is equal to or larger than the aforementioned lower limit value, the graft copolymer (B) and the methacrylic resin composition containing this graft copolymer (B) according to the present disclosure can have excellent heat resistance and excellent moldability.

The form of the graft copolymer (B) is not limited to any particular forms, and is preferably core shell-type graft copolymer particles in which surfaces of at least some of core particles made of the butadiene-based rubber-like polymer (BR) is coated with a shell layer made of the methacrylic copolymer (M). The shell layer made of the methacrylic copolymer (M) is also referred to as a graft layer.

The volume-average particle diameter (d50) of the graft copolymer (B) is not limited to any particular values, and is preferably 0.20 to 0.60 μm. The lower limit value is more preferably 0.25 μm, particularly preferably 0.30 μm, and most preferably 0.35 μm. The upper limit value is more preferably 0.50 μm, and particularly preferably 0.40 μm. When the volume-average particle diameter (d50) is equal to or larger than the aforementioned lower limit value, the graft copolymer (B) and the methacrylic resin composition according to the present disclosure can have excellent impact resistance.

When the volume-average particle diameter (d50) is equal to or smaller than the aforementioned upper limit value, the methacrylic resin composition according to the present disclosure can have excellent transparency and excellent moldability.

The volume-average particle diameter (d50) of the graft copolymer (B) can be adjusted by polymerization conditions such as the volume-average particle diameter (d50) of core particles made of the butadiene-based rubber-like polymer (BR) and the mass ratio between the butadiene-based rubber-like polymer (BR) and the methacrylic copolymer (M).

In this specification, unless otherwise specified, the "volume-average particle diameter (d50)" is a median diameter based on the volume measured by using a light scattering-type particle size distribution measuring apparatus.

The graft copolymer (B) can be manufactured by a known method.

The method for manufacturing a graft copolymer (B) can include:

a step (SB-1) of preparing core particles made of a butadiene-based rubber-like polymer (BR) and a plurality of types of raw material monomers (specifically, a plurality of monomers including methyl methacrylate (MMA) and at least one type of aromatic vinyl compound unit) for a methacrylic copolymer (M); and
a step (SB-2) of copolymerizing the aforementioned plurality of types of raw material monomers for the methacrylic copolymer (M) in the presence of the aforementioned core particles.

Examples of the copolymerization method in the step (SB-2) include a bulk polymerization method, a solution polymerization method, a suspension polymerization method, a bulk-suspension polymerization method, and an emulsion polymerization method, and the emulsion polymerization method is preferred. In the step (SB-2), a polymerization initiator and, when necessary, a chain transfer agent can be used. Examples of polymerization initiators and those of chain transfer agents are similar to those in a step (S1-1) described later. The amount of used polymerization initiator is not limited to any particular values, and is preferably 0.1 to 0.5 mass parts and more preferably 0.5 to 3.5 mass parts based on the total amount of 100 mass parts of the raw material monomers. The polymerization temperature is not limited to any particular temperatures, and is preferably 50 to 98°C. The lower limit value is more preferably 55°C, and the upper limit value is more preferably 90°C.

Note that in the step (SB-2), a methacrylic copolymer that is not bonded to the butadiene-based rubber-like polymer (BR) may be generated as a by-product. Therefore, the graft copolymer (B) may contain a small amount (e.g., about 0 to 15 mass%) of by-product methacrylic copolymer that is not bonded to the butadiene-based rubber-like polymer (BR). Typically, the unit composition of the methacrylic copolymer (M) constituting the graft chain of the graft copolymer (B) and the unit composition of the by-product methacrylic copolymer that is not bonded to the butadiene-based rubber-like polymer (BR) are the same as each other.

When the methacrylic resin composition according to the present disclosure contains the graft copolymer (B), the content of the graft copolymer (B) in the methacrylic resin composition according to the present disclosure is preferably 5 to 40 mass%. The lower limit value is more preferably 8 mass%, particularly preferably 10 mass%, and most preferably 15 mass%. The upper limit value is more preferably 35 mass%, particularly preferably 30 mass%, and most preferably 25 mass%.

When the content of the graft copolymer (B) is equal to or larger than the aforementioned lower limit value, the methacrylic resin composition according to the present disclosure can have excellent impact resistance. Further, when the content of the graft copolymer (B) is equal to or smaller than the aforementioned upper limit value, the methacrylic resin composition can have excellent heat resistance and excellent surface hardness.

(Second Methacrylic Copolymer (C))

The methacrylic resin composition according to the present disclosure can contain at least one type of second methacrylic copolymer (C) as an optional component(s). The second methacrylic copolymer (C) contains a methyl methacrylate (MMA) unit, and at least one type of aromatic vinyl compound unit other than the isopropenyl aromatic compound unit. The second methacrylic copolymer (C) can further contain at least one type of vinyl cyanide compound unit, and can further contain at least one type of other units. The second methacrylic copolymer (C) may not contain the isopropenyl aromatic compound unit.

The content of the MMA unit in the second methacrylic copolymer (C) is 10 to 90 mass%. The lower limit value is preferably 20 mass%, more preferably 30 mass%, particularly preferably 40 mass%, and most preferably 50 mass%. The upper limit value is preferably 85 mass%, more preferably 80 mass%, and particularly preferably 75 mass%.

The content of at least one type of aromatic vinyl compound unit (the total amount in the case of a plurality of types, unless otherwise specified) in the second methacrylic copolymer (C) is 70 to 10 mass%. The lower limit value is preferably 5 mass%, more preferably 10 mass%, still more preferably 12 mass%, particularly preferably 15 mass%, and most preferably 20 mass%. The upper limit value is preferably 60 mass%, more preferably 50 mass%, still more preferably 40

mass%, particularly preferably 30 mass%, and most preferably 25 mass%.

The content of at least one type of vinyl cyanide compound unit (the total amount in the case of a plurality of types, unless otherwise specified) in the second methacrylic copolymer (C) is 49 to 0 mass%. The upper limit value is preferably 45 mass%, more preferably 40 mass%, particularly preferably 35 mass%, and most preferably 30 mass%.

The content of at least one type of other monomer units (the total amount in the case of a plurality of types, unless otherwise specified) in the second methacrylic copolymer (C) is not limited to any particular values, and is preferably 0 to 5 mass%.

When the contents of the MMA unit, the aromatic vinyl compound unit, and the vinyl cyanide compound unit are within the above-described respective ranges, the second methacrylic copolymer (C) can have excellent transparency, excellent heat resistance, excellent polymerization property, and excellent moldability. Further, when the content of the MMA unit and the content of the aromatic vinyl compound unit are within the above-described respective ranges, it is possible to easily control the copolymerization of the aromatic vinyl compound unit of the second methacrylic copolymer (C), stably manufacture a second methacrylic copolymer (C) of which the composition such as the content of the aromatic vinyl compound unit is uniform, and stably manufacture a second methacrylic copolymer (C) having excellent heat resistance, and excellent mechanical properties such as excellent rigidity and excellent surface hardness.

The second methacrylic copolymer (C) is obtained by copolymerizing methyl methacrylate (MMA), at least one type of aromatic vinyl compound, when necessary, at least one type of vinyl cyanide compound, and when necessary, at least one type of other monomers (O).

The aromatic vinyl compound other than the isopropenyl aromatic compound is not limited to any particular compounds, and examples include styrene (St); alkyl-substituted styrenes such as o-, m-, or p-methylstyrene, 2,4-dimethylstyrene, 2,5-dimethylstyrene, 3,4-dimethylstyrene, 3,5-dimethylstyrene, o-, m-, or p-ethylstyrene; and 1,1-diphenylethylene. In view of the melt fluidity, the productivity, and the like of the second methacrylic copolymer (C), styrene (St) and the like are preferred.

The vinyl cyanide compound is not limited to any particular compounds, and examples include acrylonitrile (AN), methacrylonitrile, fumaronitrile, and vinylidene cyanide. In view of the availability and the adjustment of the refractive index, acrylonitrile (AN) and the like are preferred.

Examples of other monomers include vinyl-based monomers having one polymerizable unsaturated bond in one molecule, other than the methyl methacrylate (MMA) and the aromatic vinyl compound. Examples include (meth)acrylic acid; (meth)acrylate esters other than the MMA; and (meth)acrylamide.

The weight-average molecular weight (Mw) of the second methacrylic copolymer (C) is not limited to any particular values, and is preferably 40,000 to 400,000. The lower limit value is more preferably 50,000, and particularly preferably 60,000. The upper limit value is more preferably 300,000, and particularly preferably 200,000. When Mw is equal to or larger than the aforementioned lower limit value, the second methacrylic copolymer (C) can have excellent mechanical properties. Further, when Mw is equal to or smaller than the aforementioned upper limit value, the second methacrylic copolymer (C) can have excellent melt flowability and excellent moldability.

The glass transition temperature (Tg) of the second methacrylic copolymer (C) is not limited to any particular temperatures, and is preferably 95°C or higher in view of the heat resistance. The lower limit value is more preferably 98°C, and particularly preferably 100°C.

In view of the moldability of the methacrylic resin composition according to the present disclosure, Tg of the second methacrylic copolymer (C) is preferably lower than Tg of the first methacrylic copolymer (A). The upper limit value of Tg of the second methacrylic copolymer (C) is preferably 125°C, more preferably 120°C, still more preferably 115°C, still more preferably 110°C, particularly preferably 107°C, and most preferably 105°C.

The content of the second methacrylic copolymer (C) in the methacrylic resin composition according to the present disclosure is preferably 0 to 85 mass%. The lower limit value is more preferably 5 mass%, and particularly preferably 10 mass%. The upper limit value is more preferably 70 mass%, and particularly preferably 60 mass%. The methacrylic resin composition containing an appropriate amount of the second methacrylic copolymer (C) according to the present disclosure can have excellent moldability.

(Relationship of Refractive Index)

The methacrylic resin composition according to the present disclosure, which contains the first methacrylic copolymer (A) and the graft copolymer (B), and when required, can contain the second methacrylic copolymer (C), preferably satisfies shown below Formula (1).

$$0 \leq |n_b - n_m| \leq 0.01 \cdots (1)$$

In the above-shown formula, $n_m$ is defined by shown below Formula (2),

$$n_m = (n_a \times w_a + n_c \times w_c)/(w_a + w_c) \cdots (2)$$

In the above-shown formula, $n_a$, $n_b$, and $n_c$ are refractive indices of the first methacrylic copolymer (A), the graft copolymer (B), and the second methacrylic copolymer (C), respectively, for a sodium D line at 23°C, and $w_a$, $w_b$, and $w_c$ are ratios of masses of the first methacrylic copolymer (A), the graft copolymer (B), and the second methacrylic copolymer (C), respectively, to a total mass of the first methacrylic copolymer (A), the graft copolymer (B), and the second methacrylic copolymer (C) in the methacrylic resin composition, where $w_a + w_b + w_c = 1$.

$n_m$ is a mean refractive index of the matrix resin consisting of the first methacrylic copolymer (A) and the second methacrylic copolymer (C), which can be contained as an optional component.

$|n_d-n_m|$ is a difference between the refractive index of the graft copolymer (B), which is a rubber component, and the mean refractive index of the aforementioned matrix resin (also referred to as a refractive index difference (Δn)).

When the refractive index difference (Δn) is 0.01 or smaller, the methacrylic resin composition according to the present disclosure, which contains the first methacrylic copolymer (A) and the graft copolymer (B), and may contain the second methacrylic copolymer (C), can have high transparency because the scattering of light at the boundary between the matrix resin and the rubber component is reduced.

The refractive index difference (Δn) is preferably small, and its upper limit value is preferably 0.008, more preferably 0.005, still more preferably 0.003, particularly preferably 0.002, and most preferably 0.001. The ideal value of the refractive index difference (Δn) is 0.

As long as the above-shown Formula (1) can be satisfied, the refractive index (n) of each copolymer is not limited to any particular values.

The refractive index ($n_a$) of the first methacrylic copolymer (A) can be, for example, 1.500 to 1.570. The lower limit value is more preferably 1.505, particularly preferably 1.510, and most preferably 1.515. The upper limit value is preferably 1.560, more preferably 1.550, still more preferably 1.540, particularly preferably 1.530, and most preferably 1.520.

The refractive index ($n_b$) of the graft copolymer (B) can be, for example, 1.500 to 1.570. The lower limit value is more preferably 1.505, particularly preferably 1.510, and most preferably 1.515. The upper limit value is preferably 1.560, more preferably 1.550, still more preferably 1.540, particularly preferably 1.530, and most preferably 1.520.

The refractive index ($n_c$) of the second methacrylic copolymer (C) can be, for example, 1.500 to 1.570. The lower limit value is more preferably 1.505, particularly preferably 1.510, and most preferably 1.515. The upper limit value is preferably 1.560, more preferably 1.550, still more preferably 1.540, particularly preferably 1.530, and most preferably 1.520.

$|n_a-n_b|$ is not limited to any particular values, is preferably small, and is preferably 0 to 0.01. The upper limit value is preferably 0.008, more preferably 0.005, and still more preferably 0.003. Preferred ranges of $|n_a-n_c|$ and $|n_d-n_c|$ are similar to that of $|n_a-n_b|$.

Since the refractive indices of the methacrylic copolymers (A) and (C) mainly depend on the unit compositions of the copolymers, the refractive indices of the methacrylic copolymers (A) and (C) can be adjusted to desired ranges by adjusting the raw material monomer compositions. Note that the refractive indices of the methacrylic copolymers (A) and (C) can be estimated from the refractive index of the homopolymer of each monomer and the mass ratio of each monomer. For example, the theoretical value of the refractive index ($n_{XYZ}$) of a methacrylic copolymer consisting of a monomer X unit, a monomer Y unit, and a monomer Z unit can be expressed by the shown below formula.

$$n_{XYZ} = n_X \times w_X + n_Y \times w_Y + n_Z \times w_Z$$

In the above-shown formula, $n_X$, $n_Y$, and $n_Z$ are the refractive indices of the homopolymer of the monomer X, the homopolymer of the monomer Y, and the homopolymer of the monomer Z, respectively. $w_X$, $w_Y$, and $w_Z$ are the mass fractions of the monomer X unit, the monomer Y unit, and the monomer Z unit, respectively, in the copolymer. Note that $w_X + w_Y + w_Z = 1$.

The refractive index of the graft copolymer (B) can be adjusted to a desired range by adjusting the unit composition of the butadiene-based rubber-like polymer (BR) and/or the raw material monomer composition of the methacrylic copolymer (M), which is the graft chain. The refractive index of the graft copolymer (B) can also be estimated from the unit composition of the butadiene-based rubber-like polymer (BR) and the unit composition of the methacrylic copolymer (M), which is the graft chain, as in the case of the refractive indices of the methacrylic copolymers (A) and (C).

A mean refractive index ($n_m$) of the matrix resin consisting of the first methacrylic copolymer (A) contained in the methacrylic resin composition according to the present disclosure, and the second methacrylic copolymer (C) which can also be contained as an optional component in the methacrylic resin composition according to the present disclosure, and the refractive index ($n_b$) of the graft copolymer (B) contained in the methacrylic resin composition according to the present disclosure can be measured as follows.

The matrix resin consisting of the first methacrylic copolymer (A), and the second methacrylic copolymer (C),

which can be contained as an optional component, is dissolved in the methacrylic resin composition according to the present disclosure by adding a solvent capable of dissolving the matrix resin to the methacrylic resin composition according to the present disclosure. The obtained whitish solution is separated into a solvent-soluble component and a solvent-insoluble component by performing centrifugation or the like. The soluble component (matrix resin) and the insoluble component (graft copolymer (B)) are separately purified, and their refractive indices are measured.

In this specification, unless otherwise specified, the "refractive index" is a refractive index for a sodium D line at 23°C, and is determined by a method described in the [Example] section described later.

(Other Polymers)

The methacrylic resin composition according to the present disclosure may contain at least one type of other polymers in a range in which the effects of the present disclosure are not impaired. Examples of other polymers include methacrylic resins other than the above-described methacrylic copolymers (A) and (C); polyolefin resins such as polyethylene, polypropylene, polybutene-1, poly-4-methylpentene-1, and polynorbornene; styrene-based resins such as polystyrene, styrene-maleic anhydride copolymer (SMA resin), acrylonitrile-styrene copolymer (AS resin), acrylonitrile-butadiene-styrene (ABS) resin, acrylonitrile-ethylene-propylene-diene styrene (AES) resin, acrylic-acrylonitrile-styrene (AAS) resin, acrylonitrile-chlorinated ethylene-styrene (ACS) resin, methacryl butadiene styrene (MBS) resin, and silicon-acrylonitrile-styrene (SAS) resin; polyester-based resins such as polyethylene terephthalate and polybutylene terephthalate; polyamide-based resins such as nylon 6, nylon 66, and polyamide elastomer; polyimide, polyetherimide; polycarbonate-based resins; other thermoplastic resins such as polyvinyl chloride, polyvinylidene chloride, polyvinylidene fluoride, polyvinyl alcohol, ethylene-vinyl alcohol copolymer, polyacetal, ethylene-vinyl acetate copolymer, phenoxy-based resins, polysulfones, polyphenylene sulfide, polyetheretherketone, polyphenylene oxide, modified polyphenylene ether, and ethylene-based ionomers; thermosetting resins such as phenolic resins, melamine-based resins, silicone-based resins, and epoxy-based resins; polyurethane and chlorinated polyurethane resins; silicone-modified resins; acrylic rubber, silicone rubber; acrylic thermoplastic elastomers such as acrylic multilayer-structured polymer particles and acrylic block copolymers; styrene-based thermoplastic elastomers such as SEPS, SEBS, and SIS; and olefinic rubbers such as IR, EPR, and EPDM.

The total content of the first methacrylic copolymer (A), the graft copolymer (B), and the second methacrylic copolymer (C) in the methacrylic resin composition according to the present disclosure is preferably 90 to 100 mass%. The lower limit value is more preferably 95 mass%.

The amount of the other polymers (the total amount in the case of a plurality of types, unless otherwise specified) in the methacrylic resin composition according to the present disclosure is preferably from 10 to 0 mass%. The upper limit value is more preferably 5 mass%.

(Organophosphorus Compound (P))

The methacrylic resin composition according to the present disclosure may contain at least one type of organophosphorus compound (P) as an additive(s). It is considered that the organophosphorus compound (P) can effectively suppress thermal discoloration caused by the decomposed substances of the organic disulfide compound remaining in the methacrylic copolymer (A).

The organophosphorus compound (P) can be a compound containing at least one type of phosphorus atom-containing organic group (e.g., an organic group containing a P-C bond and/or a P-O-C bond). Specific examples include organophosphorus compounds containing trivalent phosphorus such as phosphite esters (also referred to as phosphites), phosphonites, and hydrolysis products thereof; organophosphorus compounds containing pentavalent phosphorus such as phosphoric esters (also referred to as phosphates), oxidation products of the aforementioned phosphite esters, and oxidation products of the aforementioned phosphonites; and combinations of these compounds and the like. As the phosphites, phosphonites, and phosphates, relatively bulky compounds having an aromatic ring are preferred. For example, compounds having an aryl substituent and a pentaerythritol structure are preferred.

Examples phosphite esters (phosphites) include monoesters, diesters, or triesters of phosphorous acid (e.g., phenyl phosphite, diphenyl phosphite, triphenyl phosphite, and the like), tris(2,4-di-t-butylphenyl) phosphite, tris(2,6-di-t-butylphenyl) phosphite, tris(2,4-di-t-butyl-5 methylphenyl) phosphite, bis(2,4-di-t-butyl-6-methylphenyl) ethylphosphite, 2,2'-methylenebis(4,6-di-t-butylphenyl) octylphosphite, bis(2,6-di-t-butyl-4-methylphenyl) pentaeristol diphosphite, (6-[3-(3-t-butyl-4-hydroxy-5-methylphenyl) propoxy]-2,4,8,10-tetra-t-butyldibenz [d, f][1,3,2] dioxaphosphepine, cyclic neopentanetetryl bis(2,6-di-t-butyl-4 methylphenyl) phosphite, and hydrolysis products of these phosphite esters.

Phosphites may be those commercially available as phosphorus-based antioxidants. Specific examples include tris(2,4-di-t-butylphenyl) phosphite (such as "Irgafos 168" manufactured by BASF), tris[2-[[2,4, 8,10-tetra-t-butyldibenzo [d,f][1,3,2] dioxaphosphepine-6-yl] oxy] ethyl] amine (such as "Irgafos 12" manufactured by BASF), bis(2,4-di-tert-butyl-6 methylphenyl) ethylphosphite (such as "Irgafos 38" manufactured by BASF), 2,2'-methylenebis(4,6-di-tert-butylphenyl)

octylphosphite (such as "ADK STB HP-10" manufactured by ADEKA), cyclic neopentanetetrylbis(2,4-di-tert-butylphenyl) phosphite (such as "ADK STB PEP 24G" manufactured by ADEKA), bis(2,6-di-t-butyl-4-methylphenyl) pentaerythritol diphosphite (such as "ADK STB PEP 36" manufactured by ADEKA), bis(2,6-di-t-butyl-4-methylphenyl) pentaerythritol diphosphite (such as "ADK STB PEP 36A" manufactured by ADEKA), cyclic neopentanetetryl bis(2,4-di-tert-butyl phenylphosphite (such as "ADK STB PEP-8" manufactured by ADEKA), and 6-[3-(3-t-butyl-4-hydroxy-5 methylphenyl) propoxy]-2,4,8,10-tetra-t-butyl dibenz [d,f][1,3,2] dioxaphosphepine (such as "Sumilizer GP" manufactured by Sumitomo Chemical Co., Ltd.).

Examples of phosphonites include tetrakis (2,4-di-tert-butylphenyl) 4,4'-biphenylenediphosphonite, tetrakis (2,4-di-tert-butyl-5 methylphenyl) 4,4'-biphenylenediphosphonite, and hydrolysis products of these phosphonites.

The phosphonites may be those commercially available as phosphorus-based antioxidants. Specific examples include tetrakis (2,4-di-tert-butylphenyl) 4,4'-biphenylenediphosphonite (such as "HostanoxP-EPQ" manufactured by Clariant AG) and tetrakis (2,4-di-t-butyl-5 methylphenyl) 4,4'-biphenylenediphosphonite (such as "GSY P101" manufactured by Sakai Chemical Industry Co., Ltd.).

Examples of phosphoric esters (phosphates) include 2-ethylhexyl acid phosphate, isodecyl acid phosphate, oleyl acid phosphate, bis(2-ethylhexyl) hydrogenphosphate, ethylene bis(diphenyl phosphate), propylene bis(diphenyl phosphate), phenylene bis(diphenyl phosphate), naphthylene bis(ditruyl phosphate), bisphenol A bis(diphenyl phosphate), 3,5-di-t-butyl-4-hydroxybenzyl phosphate diethyl ester, and hydrolysis products thereof.

The content of the organophosphorus compound (P) (the total amount in the case of a plurality of types, unless otherwise specified) in the methacrylic resin composition according to the present disclosure is not limited to any particular values, and is preferably from 0.0001 mass% (1 ppm) to 1.0 mass% in view of heat decomposition resistance (thermal stability) and in order to suppress discoloration during the heating and melting. The lower limit value is more preferably 5 ppm, still more preferably 10 ppm, still more preferably 20 ppm, still more preferably 50 ppm, particularly preferably 80 ppm, and most preferably 100 ppm. The upper limit value is more preferably 0.5 mass%, particularly preferably 0.2 mass%, and most preferably 0.1 mass%.

When the content of the organophosphorus compound (P) is too small, the effect of the addition of the organophosphorus compound (P) for suppressing discoloration during the heating and melting may not be effectively obtained. When the content of the organophosphorus compound (P) is too large, the organophosphorus compound (P) may suppress the effect of the organic disulfide compound (D) for improving heat decomposition resistance (thermal stability). Further, the organophosphorus compound (P) may bleed out during the molding process of the methacrylic resin composition according to the present disclosure.

In the methacrylic resin composition according to the present disclosure, the molar ratio of the organophosphorus compound (P) to the organic disulfide compound (D) (the molar ratio of the organophosphorus compound (P) to the organic disulfide compound (D)) is not limited to any particular values, and is preferably 0.01 to 100 in order to effectively improve heat decomposition resistance (thermal stability) and suppress the discoloration during the heating and melting. The lower limit value of this molar ratio is more preferably 0.05, particularly preferably 0.1, and most preferably 1.0. The upper limit value of this molar ratio is more preferably 50, and particularly preferably 10.

(Lubricant (L))

The methacrylic resin composition according to the present disclosure may contain, when necessary, at least one type of lubricant (L) as an additive(s). The methacrylic resin composition containing at least one type of lubricant (L) according to the present disclosure can improve mold releasability in the molding process.

Examples of lubricants (L) include stearic acid, behenic acid, stearoamic acid, and methylene bisstearoamide; waxes such as paraffin wax and ketone wax; aliphatic alcohols (preferably alcohols containing 8 to 30 carbon atoms) such as octyl alcohol, cetyl alcohol, and stearyl alcohol; hydrogenated oil; glycerin fatty acid esters (preferably glycerin carboxylic acid containing 8 to 30 carbon atoms esters) such as triglyceride hydroxystearate, monoglyceride stearate, and diglyceride stearate.

As the lubricant (L), aliphatic alcohol and glycerin fatty acid monoester can be used together. In this case, the mass ratio of aliphatic alcohol to glycerin fatty acid monoester is preferably 2.5/1 to 3.5/1, and more preferably 2.8/1 to 3.2/1.

The content of the lubricant (L) (the total amount in the case of a plurality of types, unless otherwise specified) in the methacrylic resin composition according to the present disclosure is not limited to any particular values, and is preferably 1,000 to 5,000 ppm. The upper limit value is more preferably 4,500 ppm, particularly preferably 4,000 ppm, and most preferably 3,500 ppm.

(Filler)

The methacrylic resin composition according to the present disclosure can contain at least one type of filler as

required as an additive(s) in a range in which the effects of the present disclosure are not impaired. Examples of fillers include inorganic fine particles containing a metal oxide such as silicon oxide (silica) and titanium oxide, a metal carbonate such as calcium carbonate and magnesium carbonate, a metal sulfate such as barium sulfate, carbon black, talc, clay, or a combination thereof; organic fine particles such as polysiloxane-based crosslinked polymer fine particles; and combinations of these particles.

The filler can function as a light diffusing agent or a matting agent. In view of the transparency, the content of the filler in the methacrylic resin composition according to the present disclosure is preferably small, and is preferably 0 to 3 mass%. The upper limit value is more preferably 1.5 mass%, particularly preferably 1 mass%, and most preferably 0.5 mass%. The methacrylic resin composition according to the present disclosure preferably does not contain particles other than the core shell-type graft copolymer particles made of the graft copolymer (B).

(Other Additives Other Than Those Described Above)

The methacrylic resin composition according to the present disclosure may contain, when necessary, at least one type of other additives other than the organic disulfide compound (D), the organophosphorus compound (P), the lubricant (L), and the filler as an additive(s).

Examples of other additives include antioxidants other than phosphorus-based ones, heat degradation inhibitors, ultraviolet absorbers, light stabilizers, mold release agents, polymer processing aids, antistatic agents, flame retardants, colorants (such as dyes, pigments, and organic pigments), phosphors, antistatic agents, plasticizers, surfactants, foaming agents, and antifoaming agents.

The content of other additives other than the organic disulfide compound (D), the organophosphorus compound (P), the lubricant (L), and the filler (the total amount in the case of a plurality of types, unless otherwise specified) in the methacrylic resin composition according to the present disclosure is preferably 0 to 7 mass% in order to suppress an appearance defect such as silver of a molded article. The upper limit value is more preferably 5 mass%, and particularly preferably 4 mass%.

The timing at which additives other than the other polymers and the organic disulfide compound (D), which can be contained in the methacrylic resin composition according to the present disclosure, are added is not limited to any particular timings, and is arbitrarily determined as in the case of the timing at which the organic disulfide compound (D) is added.

(Physical Property)

The methacrylic resin composition according to the present disclosure can be excellent in transparency. A haze value of a 3 mm thick plate made of a methacrylic resin composition according to the present disclosure as measured in accordance with JIS K7136 can be 0 to 10%. The upper limit value is preferably 7%, more preferably 5%, and particularly preferably 4%. The lower limit value may be, for example, 0.01%.

The methacrylic resin composition according to the present disclosure can be excellent in heat decomposition resistance. For the heat decomposition resistance, for example, a 1% thermal weight loss temperature measured by carrying out a thermogravimetric analysis (TGA) under an inert gas atmosphere can be used as its index. The 1% thermal weight loss temperature of the methacrylic resin composition according to the present disclosure can be, for example, 270°C or higher, 275°C or higher, 280°C or higher, 285°C or higher, or 290°C or higher. The upper limit value of the 1% thermal weight loss temperature is not limited to any particular values, and can be, for example, 360°C or 350°C.

The 1% thermal weight loss temperature can be measured by using a thermogravimetric apparatus, and is a temperature at which the weight loss rate becomes 1% based on the weight of 100% before the heating. For example, a TG curve is obtained by performing a thermogravimetric analysis (TGA) under the condition that the temperature is raised from a normal temperature (20 to 25°C) to 500°C at a temperature raising rate of 10°C/min under a nitrogen atmosphere, and the 1% thermal weight loss temperature can be determined from the obtained TG curve.

The methacrylic resin composition according to the present disclosure can have excellent heat resistance and excellent rigidity even when a load is imposed. The heat deflection temperature (HDT) of a test piece having a length of 80 mm, a width of 10 mm, and a thickness of 4 mm made of the methacrylic resin composition according to the present disclosure, measured in accordance with JIS K7191 can be, for example, 85°C or higher. The lower limit value is preferably 88°C, more preferably 90°C, still more preferably 95°C, still more preferably 100°C, particularly preferably 105°C, and most preferably 110°C. The upper limit value is not limited to any particular values, and is, for example, 160°C or 150°C.

The methacrylic resin composition according to the present disclosure is one of which discoloration (e.g., yellowing) is suppressed. The yellow index (YI) value of a square test piece having a length of 50 mm on each side and a thickness of 3 mm obtained by molding the methacrylic resin composition according to the present disclosure, measured in accordance with JIS K-7105 may be 5.0 or lower or 4.0 or lower. The lower limit value is not limited to any particular values, and is, for example, 1.0.

The methacrylic resin composition containing the methacrylic copolymer (A), the graft copolymer (B), and an appropriate amount of the organic disulfide compound (D) according to the present disclosure can be excellent in impact resistance at normal temperatures and low temperatures.

For a test piece having a length of 80 mm, a width of 10 mm, and a thickness of 4 mm made of the methacrylic resin composition containing the methacrylic copolymer (A), the graft copolymer (B), and an appropriate amount of the organic disulfide compound (D) according to the present disclosure, a notch having a tip radius of 0.25 mm and a depth of 2 mm is formed. Then, a Charpy impact strength measured at a normal temperature (23±2°C) according to JIS K7111 can be, for example, 4 kJ/$m^2$ or higher. The lower limit value is preferably 4.5 kJ/$m^2$, and more preferably 5 kJ/$m^2$. The upper limit value is not limited to any particular values, and is, for example, 25 kJ/$m^2$, 20 kJ/$m^2$, or 15 kJ/$m^2$.

For a test piece having a length of 80 mm, a width of 10 mm, and a thickness of 4 mm made of the methacrylic resin composition containing the methacrylic copolymer (A), the graft copolymer (B), and an appropriate amount of the organic disulfide compound (D) according to the present disclosure, a notch having a tip radius of 0.25 mm and a depth of 2 mm is formed. Then, a Charpy impact strength measured at -30°C according to JIS K7111 can be, for example, 4 kJ/$m^2$ or higher. The upper limit value is not limited to any particular values, and is, for example, 15 kJ/$m^2$, 10 kJ/$m^2$, or 8 kJ/$m^2$.

For specific methods for evaluating a haze value, a 1% thermal weight loss temperature, a heat deflection temperature (HDT), a yellow index (YI) value, and a Charpy impact strength, refer to the [Example] section described later.

[Method for Manufacturing Methacrylic Resin Composition]

A methacrylic resin composition according to the present disclosure can be manufactured by a known method.

A method for manufacturing a methacrylic resin composition according to a first embodiment of the present invention can include

a step (S1) of manufacturing an organic disulfide compound-added methacrylic copolymer (AD) containing a first methacrylic copolymer (A) and an organic disulfide compound (D).

The step (S1) can include:

- a step (S1-1) of preparing a polymerization raw material containing a plurality of raw material monomers including methyl methacrylate (MMA) and at least one type of isopropenyl aromatic compound (I), and a polymerization initiator;
- a step (S1-2) of polymerizing the polymerization raw material under a condition that a polymerization conversion rate is 30 to 60 mass%, and thereby obtaining a resin solution containing a first methacrylic copolymer (A) or a precursor resin thereof; and
- a step (S1-3) of volatilizing and removing at least a part of the raw material monomers present in the resin solution in one step or over a plurality of steps.

When the step (S1-3) is a step of obtaining a precursor resin of the first methacrylic copolymer (A), the step (S1) can further include a step (S1-4) of obtaining a first methacrylic copolymer (A) from the precursor resin by a glutarimide cyclization reaction or the like.

In the method for manufacturing a methacrylic resin composition according to this embodiment, at least one type of organic disulfide compound (D) can be added to at least one of the polymerization raw material, the resin solution obtained after the completion of the step (S-2), and the resin solution for which the step (S1-3) is being performed.

(Step (S1-1))

A polymerization raw material containing the above-described plurality of types of raw material monomers and a polymerization initiator is prepared.

The content of the MMA in the polymerization raw material is preferably from 10 to 99 mass%. The lower limit value is more preferably 15 mass%, still more preferably 20 mass%, still more preferably 25 mass%, still more preferably 30 mass%, particularly preferably 45 mass%, and most preferably 50 mass%. The upper limit value is more preferably 95 mass%, particularly preferably 90 mass%, and most preferably 87 mass%.

The content of the at least one type of isopropenyl aromatic compound (I) in the polymerization raw material is preferably 1 to 59 mass%, more preferably 5 to 40 mass%, and still more preferably from 10 to 30 mass%.

The content of the at least one type of other monomers (O) in the polymerization raw material is preferably 0 to 49 mass%, more preferably 0 to 30 mass%, and particularly preferably 0 to 25 mass%.

As the polymerization initiator, at least one type of known radical polymerization initiator can be used. Specific examples include t-hexylperoxyisopropyl monocarbonate, t-hexylperoxy 2-ethylhexanoate, 1,1,3,3-tetramethylbutylperoxy 2-ethylhexanoate, t-butylperoxypivalate, t-hexylperoxypivalate, t-butylperoxyneodecanoate, t-hexylperoxyneodecanoate, 1,1,3,3-tetramethylbutylperoxyneodecanoate, 1,1-bis(t-hexylperoxy) cyclohexane, benzoyl peroxide, 3,5,5-trimethylhexanoyl peroxide, lauroyl peroxide, 2,2'-azobis (2-methylpropionitrile) (AIBN), 2,2'-azobis (2-methylbutyronitrile), and dimethyl 2,2'-azobis (2-methylpropionate). Among them, 2,2'-azobis (2-methylpropionitrile) (AIBN), t-hexylperoxy 2-ethylhexanoate, 1,1-bis(t-hexylperoxy) cyclohexane, and dimethyl 2,2'-azobis (2-methylpropionate) are preferred.

The polymerization raw material may contain at least one type of chain transfer agent as required. The chain transfer agent can be used for the purpose of adjusting the molecular weight or the like of methacrylic copolymer (A). Examples of chain transfer agents include alkyl mercaptans such as n-octylmercaptan (n-OM), n-dodecylmercaptan, t-dodecylmercaptan, 1,4-butanedithiol, 1,6-hexanedithiol, ethylene glycol bisthiopropionate, butanediolbisthioglycolate, butanediolbisthiopropionate, hexanediolbisthioglycolate, hexanediolbisthiopropionate, trimethylolpropane tris-(β-thiopropionate), and pentaerythritol tetrakisthiopropionate; and α-methylstyrene (αMSt) dimer; and terpinolene. Among them, monofunctional alkyl mercaptans such as n-octylmercaptan (n-OM) and n-dodecylmercaptan are preferred.

The amount of used chain transfer agent (the total amount in the case of a plurality of types, unless otherwise specified) is not limited to any particular values, and is preferably 0 to 1 mass parts based on the total of 100 mass parts of the plurality of types of raw material monomers. The upper limit value is more preferably 0.5 mass parts, particularly preferably 0.4 mass parts, and most preferably 0.3 mass parts.

The polymerization raw material can contain, when necessary, at least one type of additive other than those described above.

The polymerization raw material can be prepared by mixing a plurality of types of raw material monomers, at least one type of polymerization initiator, when necessary, at least one type of chain transfer agent, and when necessary, at least one type of additive under an inert gas atmosphere such as a nitrogen gas atmosphere or in the presence of oxygen. These materials may be mixed at once or in a divided manner, and the mixing procedure for the divided mixing is not limited to any particular procedures.

The content of water in the polymerization raw material is preferably 0 to 1,000 ppm. The upper limit value is more preferably 700 ppm, and particularly preferably 280 ppm. The polymerization raw material can be, when necessary, dehydrated by a known method.

The amount of dissolved oxygen in the polymerization raw material is preferably adjusted to 0 to 10 ppm by nitrogen purge or the like. The upper limit value of the amount of dissolved oxygen is more preferably 5 ppm, particularly preferably 4 ppm, and most preferably 3 ppm.

(Step (S1-2))

The polymerization can be carried out by a known method, and a bulk polymerization method is preferred. For example, the following continuous bulk polymerization method is preferred. That is, a resin solution containing a methacrylic resin (A) or its precursor resin is obtained by continuously supplying the polymerization raw material prepared in the step (S1-1) to a tank-type reactor, and performing bulk polymerization in the tank-type reactor under the condition that the polymerization conversion rate is 30 to 60%. Then, the obtained resin solution is continuously extracted from the tank-type reactor.

The polymerization is preferably carried out under an atmosphere of an inert gas such as a nitrogen gas.

The polymerization temperature is not limited to any particular temperatures, and is preferably 110 to 160°C, more preferably 120 to 155°C, and particularly preferably 130 to 150°C.

The average residence time in the tank-type reactor is not limited to any particular lengths, and is preferably 1.5 to 6 hours, more preferably 2 to 5.5 hours, and particularly preferably 2.5 to 5 hours.

The average concentration of the radical polymerization initiator present in the solution in the tank-type reactor is not limited to any particular values, and is preferably $1.0\times10^{-6}$ to $2.0\times10^{-5}$ mol/L.

The polymerization conversion rate is more preferably 35 to 58%, particularly preferably 35 to 55%, and most preferably 35 to 50%.

(Step (S1-3))

At least a part of the unreacted raw material monomers present in the resin solution is volatilized and removed in one step or over a plurality of steps. Examples of volatilization and removal methods include an adiabatic flash evaporation method, an equilibrium flash evaporation method, and a combination thereof, and the adiabatic flash evaporation method and the like are preferred.

The volatilization and removal of the unreacted raw material monomers present in the resin solution can be carried out by a known method using a heat exchanger, an extruder equipped with a vent, or a combination thereof, and the combination of a heat exchanger and an extruder equipped with a vent is preferred.

The heating temperature by the heat exchanger (also referred to as the set temperature of the heat exchanger or a heat exchanger temperature) is not limited to any particular temperatures, and is preferably 180 to 280°C. The lower limit value is more preferably 190°C, and particularly preferably 200°C. The upper limit value is more preferably 270°C, particularly preferably 260°C, and most preferably 250°C.

Examples of extruders include a single-screw extruder, a twin-screw extruder, and a multi-screw extruder. The extruder includes a resin input port through which a resin solution is charged, a cylinder with a built-in screw, and a die including a resin discharge port for discharging a methacrylic resin (A) or its precursor resin obtained after the step (S1-3), and can include an additive supply port as required. The number of vents included in the extruder equipped with the vent is at least one, and is preferably two or more. The molten resin temperature inside the die (also referred to as a die resin temperature) is not limited to any particular temperatures, and is preferably 230 to 260°C. The lower limit value is more preferably 235°C, and particularly preferably 240°C. The upper limit value is more preferably 255°C, and particularly preferably 250°C.

When the heating temperature by the heat exchanger and the molten resin temperature inside the die are within the above-described respective ranges, the thermal decomposition of the methacrylic copolymer (A) or its precursor resin is suppressed, so that a methacrylic resin composition having excellent heat resistance and excellent heat decomposition resistance (thermal stability) can be manufactured. Further, it is possible to stably manufacture a methacrylic copolymer (A) or its precursor resin of which the composition such as the content of the isopropenyl aromatic compound unit (UI) is uniform, and stably manufacture a methacrylic copolymer (A) or its precursor resin having excellent heat resistance and excellent mechanical properties such as excellent rigidity and excellent surface hardness.

The unreacted raw material monomers removed from the resin solution may be collected and reused as raw material monomers.

In the method for manufacturing a methacrylic resin composition according to the present disclosure, at least one type of organic disulfide compound (D) is added to at least one of the polymerization raw material, the resin solution obtained after the completion of the step (S1-2), and the resin solution for which the step (S1-3) is being performed so that the at least one type of organic disulfide compound (D) is present in an amount of 1 to 1,000 ppm in the finally-obtained methacrylic resin composition.

At least one type of organic disulfide compound (D) is preferably added at least to the polymerization raw material, among the polymerization raw material, the resin solution obtained after the completion of the step (S1-2), and the resin solution for which the step (S1-3) is being performed.

The amount of the at least one type of organic disulfide compound (D) added to the polymerization raw material is preferably from 10 to 2,000 ppm. The lower limit value is more preferably 20 ppm, still more preferably 30 ppm, still more preferably 50 ppm, still more preferably 80 ppm, particularly preferably 100 ppm, and most preferably 200 ppm. The upper limit value is more preferably 1,500 ppm, particularly preferably 1,200 ppm, and most preferably 1,000 ppm.

In the method for manufacturing a methacrylic resin composition according to the present disclosure, when required, at least one type of organophosphorus compound (P) can be added to at least one of the polymerization raw material, the resin solution obtained after the completion of the step (S1-2), and the resin solution for which the step (S1-3) is being performed. The at least one type of organophosphorus compound (P) can be supplied, for example, from the additive supply port of the extruder.

In the method for manufacturing a methacrylic resin composition according to the present disclosure, when required, at least one type of lubricant (L) can be added to at least one of the polymerization raw material, the resin solution obtained after the completion of the step (S1-2), and the resin solution for which the step (S1-3) is being performed. The at least one type of lubricant (L) can be supplied, for example, from the additive supply port of the extruder.

(Step (S1-4))

When the step (S1-3) is a step of obtaining a precursor resin of the first methacrylic copolymer (A), the step (S1) can include a step (S1-4) of obtaining the first methacrylic copolymer (A) from the precursor resin by a glutarimide cyclization reaction or the like.

The content of the organic disulfide compound (D) (the total amount in the case of a plurality of types, unless otherwise specified) in the organic disulfide compound-added methacrylic copolymer (AD) obtained after the step (S1) is preferably from 10 to 2,000 ppm. The lower limit value is more preferably 20 ppm, still more preferably 30 ppm, still more preferably 50 ppm, still more preferably 80 ppm, particularly preferably 100 ppm, and most preferably 150 ppm. The upper limit value is more preferably 1,500 ppm, particularly preferably 1,200 ppm, and most preferably 1,000 ppm.

The organic disulfide compound-added methacrylic copolymer (AD) contains the first methacrylic copolymer (A) containing the isopropenyl aromatic compound unit (UI), and an appropriate amount of the organic disulfide compound (D), and can be excellent in heat resistance, heat decomposition resistance (thermal stability), and surface hardness.

The method for manufacturing a methacrylic resin composition according to the present disclosure, which contains the first methacrylic copolymer (A) and the graft copolymer (B), and when required, can contain the second methacrylic copolymer (C), may include, for example, a step of melting and kneading at least one type of first methacrylic copolymer (A), at least one type of graft copolymer (B), at least one type of second methacrylic copolymer (C), and when required, at least one type of other polymers. In this method, at least one type of additive including the organic disulfide compound (D) may be added at an arbitrary timing.

A method for manufacturing a methacrylic resin composition according to a second embodiment of the present invention can include:

a step (S1) of manufacturing an organic disulfide compound-added methacrylic copolymer (AD) containing a first methacrylic copolymer (A) and an organic disulfide compound (D); and
a step (S2) of melting and kneading 10 to 95 mass% of an organic disulfide compound-added methacrylic copolymer (AD), 5 to 40 mass% of a graft copolymer (B), and 0 to 85 mass% of a second methacrylic copolymer (C).

The step (S1) in the method for manufacturing a methacrylic resin composition according to the second embodiment is similar to the step (S1) in the method for manufacturing a methacrylic resin composition according to the first embodiment.

In general, a methacrylic copolymer containing an MMA unit and an isopropenyl aromatic compound unit such as an $\alpha$MSt unit tends to have a relatively low thermal decomposition temperature. Therefore, for this copolymer, there is a risk that the copolymer thermally decomposes when it is heated and melted such as during the manufacturing the resin and during the molding process, and the amount of remaining monomers in the resin increases, so that the heat resistance deteriorates. Further, if the residence time in the heated and melted state increases during the manufacturing of the resin and during the molding process, an appearance defect such as foaming may occur due to the thermal decomposition of the methacrylic copolymer.

In the manufacturing method according to this embodiment, in the step (S1), the thermal decomposition of the first methacrylic copolymer (A) is effectively suppressed by the presence of an appropriate amount of the organic disulfide compound (D). As a result, it is possible to stably manufacture a first methacrylic copolymer (A) which has excellent heat resistance and excellent heat decomposition resistance (thermal stability), and in which the amount of remaining monomers is small.

Further, in the step (S1), owing to the presence of an appropriate amount of the organic disulfide compound (D), it is possible to easily control the copolymerization of the isopropenyl aromatic compound (I), stably manufacture a first methacrylic copolymer (A) of which the composition such as the content of the isopropenyl aromatic compound unit (UI) is uniform, and stably manufacture a first methacrylic copolymer (A) having excellent heat resistance and excellent mechanical properties such as excellent rigidity and excellent surface hardness.

In the step (S1), an appearance defect such as foaming due to the thermal decomposition of the first methacrylic copolymer (A) is suppressed even when the residence time in the heated and melted state increases.

In the organic disulfide compound-added methacrylic copolymer (AD), the thermal decomposition of the first methacrylic copolymer (A), and the second methacrylic copolymer (C), which can be contained as an optional component, and the gelation of the graft copolymer (B) can be effectively suppressed by the presence of an appropriate amount of the organic disulfide compound (D) even in the step (S2) and in the subsequent heating and melting such as during the molding process.

(Step (S2))

The melting and kneading can be performed in one step or over a plurality of steps, and the procedure for mixing a plurality of types of copolymers is arbitrarily determined. The melting and kneading can be performed by using a known mixing apparatus or a kneading apparatus such as an extruder (preferably a twin-screw extruder), a kneader-ruder, a mixing roll, and a Bambury mixer.

The methacrylic resin composition according to the present disclosure can be processed into a form suitable as a molding material, such as in the form of pellets or a powder, by a known method.

As described above, according to the present disclosure, it is possible to provide a methacrylic resin composition which has excellent heat resistance, excellent heat decomposition resistance (thermal stability), and excellent moldability, and of which the discoloration (e.g., yellowing) is suppressed.

Further, according to the present disclosure, it is possible to provide a methacrylic resin composition which contains a graft copolymer containing a butadiene unit, and a methacrylic copolymer, and has excellent transparency, heat resistance, surface hardness, and impact resistance at normal temperatures and low temperatures.

[Molded Article]

A molded article according to the present disclosure can contain the above-described methacrylic resin composition according to the present disclosure.

The molding may be performed by a known molding method such as injection molding, compression molding, extrusion molding, and vacuum molding. Examples of molded articles include a planer article having a single-layer structure or a laminated structure, such as a film, a sheet, or a plate; and arbitrary three-dimensional structure or the like.

The molded article may be a laminated body or a composite body including a layer or a member made of the methacrylic resin composition according to the present disclosure, and a layer or a member made of other resins or various materials other than resins. For a molded article obtained by a known molding method, when required, surface treatments such as printing, painting, plating, vapor deposition, and sputtering may be performed; and shaping processes such as bending, folding, and cutting (also referred to as secondary molding) may be performed.

In general, the terms "film", "sheet", or "plate" are used for a thin-film molded article depending on the thickness, but there are no clear definitions of them, and there is no clear distinction among them.

The molding method is not limited to any particular methods, and examples include melt molding methods such as an extrusion molding method, an injection molding method, an inflation molding method, a blow molding method, and a calendar molding method; a compression molding method (also referred to as a press molding method); a vacuum molding method and a compressed-air molding method; and a solution molding method (also referred to as a solution casting method).

Among them, the melt molding method is preferred. The melt molding temperature is not limited to any particular temperatures, and is preferably 180 to 280°C, and more preferably 200 to 260°C. The methacrylic resin composition according to the present disclosure, which contains at least one type of organic disulfide compound (D), has excellent heat decomposition resistance (thermal stability), so that the thermal decomposition and the gelation are suppressed even when the methacrylic resin composition is heated to a relatively high temperature, thus making it possible to provide a molded article having excellent appearance and high quality.

[Use]

The methacrylic resin composition according to the present disclosure can be used in arbitrary uses.

The methacrylic resin composition according to the present disclosure has excellent heat resistance and excellent heat decomposition resistance (thermal stability), and of which discoloration (e.g., yellowing) is suppressed, so it can be used in: optical members; members of electronic apparatuses such as mobile phones and personal computers; and components of transportation apparatuses such as vehicles (such as automobiles).

Examples of optical members include members for displays such as liquid crystal displays, plasma displays, organic electroluminescence (EL) displays, field emission displays, and rear projection televisions; and touch panel displays in which a touch panel and a display are combined with each other. Examples of optical members for displays include polarizer protection films, retardation plates (such as a 1/4 wavelength plate and a 1/2 wavelength plate), liquid crystal optical compensation films (such as a viewing angle control film), display front plates, display substrates, transparent conductive substrates for touch panels, light guide plates, and lenses (arrays).

In this specification, unless otherwise specified, the term "lens (array)" is a generic term for lenses and lens arrays.

Examples of other optical members include optical members of solar cells (such as transparent substrates, back films, and front films); optical members used in fields such as optical communication, optical exchange, and optical measurement (such as waveguides, lenses (arrays), optical fibers, coating materials for optical fibers); optical members of light-emitting elements such as light-emitting diodes (LEDs) (such as lenses and lens covers).

The methacrylic resin composition according to the present disclosure is also suitable for films such as surface protection films for electronic apparatuses such as mobile phones and personal computers, and marking films.

Examples of optical members for vehicles include rear lamp outer covers and optical members inside rear lamps; inner lenses for headlights (also called projector lens or PES lens); front plates or molded articles for on-board meter panels and car navigation; door mirror housings, pillar covers (sash covers), license garnishes, front grills, fog garnishes, emblems, light guide rods; optical components for head-up displays such as optical cover members; optical members for DMS (Driver Monitoring System), OMS (Occupant Monitoring System), gesture control, and LiDAR (Light Detection And Ranging).

Examples of other members for transportation apparatuses other than those described above include aircraft windshields, pilot visors, motorcycle windshields, motor boat windshields, bus light shielding plates, automobile side visors, rear visors, head wings, headlight covers, automobile interior members, and automobile exterior members such as bumpers.

Examples of other uses of the methacrylic resin composition according to the present disclosure include interior components such as furniture, wallpaper, pendant lights, and mirrors; construction components such as doors, sashes, domes, safety window glass, partitions, stair baseboards, balcony baseboards, and roofs of leisure buildings; signboard components or marking films such as advertising towers, stand signboards, side signboards, transom signboards, and rooftop signboards; display components such as showcases, partition boards, and store displays; lighting components such as fluorescent lamp covers, mood lighting covers, lampshades, luminous ceilings, luminous walls, and chandeliers; other household appliances such as TV protective masks; audio and video nameplates, and stereo covers; vending machines; medical equipment components such as incubators and x-ray components; equipment components such as

clock panels, machine covers, instrument covers, laboratory equipment, dial faces, and observation windows; traffic components such as road signboards, guide boards, curve mirrors, and soundproof walls; bathroom components such as bathtubs, and sanitary components; greenhouses, large water tanks, and box water tanks; stationery such as rulers and desk mats; game components, toys, and musical instruments; and decorative films and protective films provided on surfaces of face protection masks for welding.

## Examples

Examples according to the present invention and comparative examples will be described hereinafter.

[Evaluation Item and Evaluation Method]

Evaluation items and evaluation methods are as follows.

(Polymerization Conversion Rate)

A polymerization conversion rate was determined by a gas chromatography analysis. INERTCAP 1 (film thickness 0.4 μm, inner diameter 0.25 mmφ, length 60 m) manufactured by GL Sciences Inc. was connected, as a column, to "Gas Chromatograph GC-14A" manufactured by Shimadzu Corporation. Analyses were carried out under the shown below conditions, and polymerization conversion rates were calculated from obtained data.

Injection Temperature: 250°C,
Detector Temperature: 250°C,
Temperature Profile: Held at 60°C for 5 minutes -> Temperature was raised to 250°C at a temperature raising rate of 10°C/min -> Held at 250°C for 10 minutes.

(Weight-Average Molecular Weight (Mw), Molecular Weight Distribution (Mw/Mn))

Weight-average molecular weights (Mw) and molecular weight distributions (Mw/Mn) of resins were determined by gel permeation chromatography (GPC) analyses. A GPC apparatus "HLC-8320" manufactured by Tosoh Corporation was used as a measuring apparatus. As a separation column, one obtained by connecting "TSK guard column Super HZ-H", "TSK gel HZM-M", and "TSK gel Super HZ4000" manufactured by Tosoh Corporation in series was used. A differential refractive index detector (RI detector) was used as a detector.

A sample solution was prepared by dissolving 4 mg of a resin to be measured in 5 ml of tetrahydrofuran. The temperature of the column oven was set at 40°C. Tetrahydrofuran was used as an eluent, and an eluent flow rate was set to 0.35 ml/min. 20 μl of the sample solution was injected into the apparatus, and its chromatogram was measured. GPC measurements were performed for 10 pieces of standard polymethyl methacrylate (PMMA) of which the molecular weight was within the range of 400 to 5,000,000, and a calibration curve showing a relationship between retention times and molecular weights was created. The standard PMMA equivalent Mw and Mw/Mn of the resin to be measured were determined based on this calibration curve.

(Glass Transition Temperature (Tg))

The glass transition temperature (Tg) of the resin to be measured was measured by using a differential scanning calorimeter ("DSC-50" manufactured by Shimadzu Corporation) according to JIS K7121. 10 mg of the resin to be measured was placed in an aluminum pan and set in the aforementioned apparatus. After nitrogen replacement was performed for 30 minutes or longer, the temperature was temporarily raised from a room temperature (20 to 25°C) to 250°C at a rate of 20°C/min in a nitrogen stream of 10 ml/min, held for 5 minutes, and cooled to the room temperature (first scanning). Next, the temperature was raised to 200°C at a rate of 10°C/min (second scanning), and a DSC curve was measured. An intermediate glass transition temperature determined from the DSC curve obtained in the second scanning was defined as a glass transition temperature (Tg).

(Unit Composition of Methacrylic Copolymer)

For each unit, $^{1}$H-NMR spectrum or $^{13}$C-NMR spectrum was measured, and its unit composition of the methacrylic copolymer was obtained from a ratio of an integrated value of a peak originating from the unit. An example of a specific measurement method is shown hereinafter.

For the methyl methacrylate-α-methylstyrene copolymer (MMA-αMSt copolymer), $^{1}$H-NMR spectrum was

measured; and a peak originating from protons of the methoxy group of the methyl methacrylate (MMA) unit and a peak originating from protons of the phenyl group of the α-methylstyrene (αMSt) unit were specified. Then, the unit composition was determined from a ratio of integrated values of these peaks.

For the methyl methacrylate-α-methylstyrene-styrene copolymer (MMA-αMSt-St copolymer), $^{13}$C-NMR spectrum was measured under the condition of a measurement mode: a decoupling method using a reversed gate; and a peak originating from carbons of the carbonyl group of the methyl methacrylate (MMA) unit, a peak originating from carbons of the phenyl group of the α-methylstyrene (αMSt) unit, and a peak originating from carbons of the phenyl group of the styrene (St) unit were specified. Then, the unit composition was determined from a ratio of integrated values of these peaks.

For the methyl methacrylate-α-methylstyrene-maleic anhydride copolymer (MMA-αMSt-Mah copolymer), $^{13}$C-NMR spectrum was measured under the condition of a measurement mode: a decoupling method using a reversed gate; and a peak originating from carbons of the carbonyl group of the methyl methacrylate (MMA) unit, a peak originating from carbons of the phenyl group of the α-methylstyrene (αMSt) unit, and a peak originating from carbons of the carbonyl group of the maleic anhydride (Mah) unit were specified. Then, the unit composition was determined from a ratio of integrated values of these peaks.

For the methyl methacrylate-α-methylstyrene-cyclohexylmaleimide copolymer (MMA-αMSt-ChMI copolymer), $^{13}$C-NMR spectrum was measured under the condition of a measurement mode: a decoupling method using a reversed gate; and a peak originating from carbons of the carbonyl group of the methyl methacrylate (MMA) unit, a peak originating from carbons of the phenyl group of the α-methylstyrene (αMSt) unit, and a peak originating from carbons of the carbonyl group of the cyclohexylmaleimide unit were specified. Then, the unit composition was determined from a ratio of integrated values of these peaks.

For the methyl methacrylate-styrene-cyclohexylmaleimide-phenylmaleimide copolymer (MMA-St-ChMI-PhMI copolymer), $^{13}$C-NMR spectrum was measured under the condition of a measurement mode: a decoupling method using a reversed gate; and a peak originating from carbons of the carbonyl group of the methyl methacrylate (MMA) unit, a peak originating from carbons of the phenyl group of the styrene (St) unit, a peak originating from carbons of the carbonyl group of the cyclohexylmaleimide unit, and a peak originating from carbons of the carbonyl group of the phenylmaleimide unit were specified. Then, the unit composition was determined from a ratio of integrated values of these peaks.

For the methyl methacrylate-α-methylstyrene-styrene-methylglutarimide copolymer (MMA-αMSt-St-MeGI copolymer), $^{1}$H-NMR spectrum was measured, and a peak originating from protons of the methyl methacrylate (MMA) and a peak originating from protons of the glutarimide unit were specified.

Integrated values of the above-described two peaks were respectively determined, and the glutarimide cyclization ratios (mol%) were determined based on the shown below formula.

$$[\text{Glutarimide Cyclization Ratio}]\ (\text{mol\%}) = [SG/(SM+SG)]\times 100$$

In the above-shown formula, SM is the integrated value of the peak originating from the MMA unit, and SG is the integrated value of the peak originating from the glutarimide unit.

For each unit, the glutarimide cyclization ratio (mol%) was converted into a glutarimide cyclization ratio (mass%) by using the molecular weight of the unit.

The unit composition of the methyl-α-methylstyrene-styrene-methylglutarimide copolymer (MMA-αMSt-St-MeGI copolymer) was determined from the unit composition of the methyl-α-methylstyrene-styrene copolymer (MMA-αMSt-St copolymer) before the glutarimidation and the glutarimide cyclization ratio (mass%).

(Remaining Amount of Each Monomer in Methacrylic Resin Composition)

The remaining amount of each monomer in the methacrylic resin composition was determined from $^{1}$H-NMR spectrum or $^{13}$C-NMR spectrum in a manner similar to that for the above-described evaluation of "Monomer Unit Composition of Methacrylic Resin".

(Volume-Average Particle Diameter (d50) of Graft Copolymer (B))

A solution containing 1 mass% of graft copolymer (B) was prepared by adding N,N-dimethylformamide (DMF) to a graft copolymer (B) and stirring the mixture for 24 hours. Then, an ultrasonic dispersion process was performed for the mixture for about one hour. Using this solution as a sample solution, a particle size distribution was measured by using a light scattering-type particle size distribution measuring apparatus (Coulter Multisizer LS230 manufactured by Beckman Coulter). As the volume-average particle diameter of the graft copolymer (B), a median diameter (d50) based on the volume was determined.

(Composition of Graft Layer of Graft Copolymer (B))

Methyl ethyl ketone was added to the graft-based copolymer (B), and the mixture was stirred at 23°C for 24 hours. The insoluble component was separated by centrifugation performed for 60 minutes under conditions of a temperature of -9°C and a rotation speed of 20,000 rpm, and was left undisturbed for 30 minutes. The supernatant was separated, and a methacrylic copolymer, which was a by-product that was not bonded to the butadiene-based rubber-like polymer (BR), was precipitated by adding methanol to the separated supernatant. This precipitate was collected, dissolved in heavy chloroform. Then, the unit composition was determined by measuring $^1$H-NMR spectrum.

The unit composition of the methacrylic copolymer (M) constituting the graft layer of the graft copolymer (B) was considered to be the same as that of the methacrylic copolymer, which was the by-product. Therefore, the unit composition of the methacrylic copolymer, which was the by-product, was used as the unit composition of the graft layer.

(Refractive Indices ($n_a$, $n_b$, $n_c$) of Copolymers, Mean Refractive Index ($n_m$) of Methacrylic Copolymer, $|n_d-n_m|$)

The refractive index ($n_a$) of the organic disulfide compound-added methacrylic copolymer (AD), the refractive index ($n_a$) of the methacrylic copolymer (AC) for comparison, the refractive index ($n_b$) of the graft copolymer (B), and the refractive index ($n_c$) of the methacrylic copolymer (C) were measured according to the A-method of JIS K7142. The refractive index of the sodium D line at 23°C was measured by using an Abbe refractive index meter (NAR-3T manufactured by ATAGO Co., Ltd.).

The mean refractive index ($n_m$) of the methacrylic copolymer defined by Formula (2) was determined, and $|n_d-n_m|$ was determined.

(Content of Organic Disulfide Compound (D))

The content of the organic disulfide compound (D) in the methacrylic resin composition was measured as described hereinafter.

After dissolving 2 g of a methacrylic resin composition in 10 mL of dichloromethane, 30 mL of hexane was added and reprecipitated. A supernatant liquid obtained after this reprecipitation process was separated, and the solvent in the supernatant was removed by distillation under a reduced pressure and concentrated. The obtained concentrate was dissolved again in 1 mL of dichloromethane, and 4 mL of hexane was added and reprecipitated. 25 μL of a supernatant liquid obtained after this reprecipitation process was collected on a platinum board as a measurement sample. Then, after removing dichloromethane, a pyrolysis gas chromatography analysis was carried out.

"Agilent J & W Series DB-5 (inner diameter: 0.25 mm, film thickness: 0.25 μm, length: 30.0 m) manufactured by Agilent Technologies was connected, as a column, to "Gas Chromatograph GC-14A" manufactured by Shimadzu Corporation. Analyses were carried out under the shown below conditions. The content of the organic disulfide compound (D) was determined based on a calibration curve obtained from pyrolysis gas chromatography analyses of a plurality of standard solutions of an organic disulfide compound having different concentrations.

Vaporization Chamber Temperature: 260°C,
Column Oven Temperature: 100°C,
Temperature Profile: Temperature was raised to 320°C at a temperature raising rate 20°C/min -> Held at 320°C for 30 minutes.

(Haze Value)

A test piece having a length 50 mm on each side and a thickness of 3 mm was obtained by injection-molding the methacrylic resin composition by using an injection molding machine ("M-100C" manufactured by Meiki Co., Ltd.) under a condition of a cylinder temperature of 250°C. The haze value of this test piece was measured by using a haze meter ("HM-150" manufactured by Murakami Color Research Laboratory) according to JIS K7361.

(1% Thermal Weight Loss Temperature)

Using a thermogravimetry apparatus ("TGA-50" manufactured by Shimadzu Corporation), a TG curve was obtained by raising the temperature of about 5 mg of the methacrylic resin composition from a room temperature (20 to 25°C) to 500°C at a temperature raising rate of 10°C/min under a nitrogen atmosphere. A temperature at which the weight loss rate was 1% based on the pre-heating weight of 100% was determined as a 1% thermal weight loss temperature.

(Melt Flow Rate (MFR))

A melt flow rate (MFR) of a methacrylic resin composition was measured at 230°C under a load of 3.8 kg according to JIS K7210.

(Stability During Heated Retention)

Injection molding was performed by using an injection molding machine ("M-100C" manufactured by Meiki Co., Ltd.). After the methacrylic resin composition was retained in a cylinder of which the temperature was set to 260°C for 30 minutes, a plate having a length of 200 mm, a width of 50 mm, and a thickness of 2 mm was 10-shot molded under conditions of a mold temperature of 60°C and an injection speed of 50 mm/sec. The appearance of each plate was visually observed and evaluated according to the following criteria.

A (Excellent): No foaming was observed from the first shot.
B (Good): A small amount of foaming was observed during the first to third shots, but no foaming was observed at and after the fourth shot.
C (Acceptable): A large amount of foaming was observed during the first to third shots.
D (Unacceptable): A sprue break occurred during the first to tenth shots.

(Heat Deflection Temperature (HDT))

A test piece having a length of 80 mm, a width of 10 mm, and a thickness of 4 mm was obtained by injection-molding a methacrylic resin composition using an injection molding machine ("M-100C" manufactured by Meiki Co., Ltd.) at a cylinder temperature of 230°C, a mold temperature of 60°C, and an injection speed of 50 mm/sec. The condition of the obtained test piece was adjusted according to JIS K6712-2. The heat deflection temperature (HDT) of the test piece was measured in accordance with JIS K7191.

(Yellow Index (YI) value)

A test piece having a length of 50 mm on each side and a thickness of 3 mm was obtained by injection-molding a methacrylic resin composition using an injection molding machine ("M-100C" manufactured by Meiki Co., Ltd.) at a cylinder temperature of 230°C, a mold temperature of 60°C, and an injection speed of 50 mm/sec. The yellow index (YI) value of this test piece was measured under the following conditions. The test piece was set in a spectrophotometer (PC-2200 manufactured by Shimadzu Corporation), and light-ray transmittance was measured at intervals of 1 nm in a wavelength range of 340 to 700 nm by using a C-light source. From the obtained data, XYZ values were determined according to JIS Z-8722, and the yellow index (YI) value was calculated according to JIS K-7105.

(Pencil Hardness)

A test piece having a length 50 mm on each side and a thickness of 3 mm was obtained by injection-molding the methacrylic resin composition by using an injection molding machine ("M-100C" manufactured by Meiki Co., Ltd.) under a condition of a cylinder temperature of 250°C. For each test piece, by using a table moving-type pencil scratching tester ("Model P" manufactured by Toyo Seiki Co., Ltd.), the presence/absence of a scratched scar was checked while pressing a pencil lead against the surface of the test piece at an angle of 45° under a condition of a load of 500 g or 750 g. The hardness of the pencil lead was successively increased, and the hardness of the lead one step softer than the hardness at which a scar occurred was used as the pencil hardness.

(Charpy Impact Strength)

A test piece having a length (l) 80 mm, a width (b) of 10 mm, and a thickness (h) of 4 mm was obtained by injection-molding the methacrylic resin composition by using an injection molding machine ("M-100C" manufactured by Meiki Co., Ltd.) under a condition of a cylinder temperature of 250°C. A notch having a tip radius (rN) of 0.25 mm and a depth of 2 mm (i.e., the remaining width (bN) of the test piece with the notch = 8 mm) was formed in the test piece by using a notching machine according to JIS K7111. A Charpy impact strength was measured at a room temperature (23°C) and/or a low temperature (-30°C) according to JIS K7111.

[Additive]

The used additives were as follows.

<Organic Disulfide Compound (D)>
(DDS) di-tert-dodecyl disulfide.
<Organophosphorus Compound (P)>

(PEP-36) phosphite-based antioxidant, "ADK STB PEP-36" manufactured by ADEKA,
(TPP) triphenylphosphine.

<Antioxidant Other Than Phosphorus-based>
(GS) phenol-based antioxidant, "Sumilizer GS" manufactured by Sumitomo Chemical Co., Ltd.
<Lubricant (L)>

(StMg) glycerol monostearate,
(StOH) stearyl alcohol.

[Example E1-1]

85 mass parts of purified methyl methacrylate (MMA), 15 mass parts of α-methylstyrene (αMSt), 400 ppm of n-octylmercaptan (n-OM) as a chain transfer agent, and 300 ppm of di-tert-dodecyl disulfide (DDS) were charged into an autoclave equipped with a stirrer and a collection tube, and were uniformly mixed. A polymerization raw material was obtained by adding 500 ppm of 2,2'-azobis (2-methylpropionitrile) (AIBN) to this mixture as a polymerization initiator, and uniformly mixing the mixture. A nitrogen gas was blown into this polymerization raw material, and the dissolved oxygen concentration was thereby adjusted to 3 ppm. The composition of this polymerization raw material is also referred to as a preparation composition.

Next, a continuous flow tank-type reactor equipped with a brine chiller condenser was prepared, and the inside of this reactor was replaced with nitrogen gas. The above-described polymerization raw material was continuously fed into this reactor at a constant flow rate so that the average residence time became 3.3 hours. Then, bulk polymerization was carried out at a polymerization temperature of 120°C, and a resin solution containing a methacrylic resin, which was the reaction product, was continuously discharged from the reactor. Note that the pressure inside the reactor was controlled by a pressure control valve connected to the brine chiller condenser. The polymerization conversion rate was 30%.

A twin-screw extruder including a resin input port through which the above-described resin solution discharged from the reactor is charged, a die including a resin discharge port for discharging a manufactured resin, a first vent (also referred to as a rear vent) located relatively close to the resin input port, a second vent (also referred to as a front vent) located relatively close to the resin discharge port, and an additive supply port located between the second vent (front vent) and the resin discharge port was prepared.

The above-described resin solution discharged from the reactor was heated by using a heat exchanger, and then supplied to the above-described extruder through the resin supply port. The set temperature of the heat exchanger was adjusted to 200°C, and the set temperature of the cylinder of the extruder was adjusted to 245°C. From the resin solution supplied into the cylinder of the extruder, volatile components consisting mainly of unreacted monomers were flash-evaporated and discharged through the first vent (rear vent). Further, the resin was conveyed in the axial direction of the cylinder by a screw, and the volatile components evaporated during the conveyance were discharged through the second vent (front vent). The screw speed was set at 164 rpm. The resin was extruded, from the resin discharge port of the extruder, into strands. The molten resin temperature inside the die was 244°C. Pellets of the methacrylic resin composition containing the methacrylic copolymer (A-1) containing the methyl methacrylate (MMA) unit and the α-methylstyrene (αMSt) unit were obtained by cutting the obtained strands by using a pelletizer.

Table 1 shows the main manufacturing conditions and evaluation results. In Tables 1 to 3, conditions that are not shown in the tables are the same as each other. In the tables, "Raw Material Composition" is a composition obtained by combining the preparation composition and the additive(s) added thereafter. In the tables, the amounts of the polymerization initiator, the chain transfer agent, and the organic disulfide compound (D) in the raw material composition are amounts based on the total amount of 100 mass% of the raw material monomers.

[Examples E1-4 to E1-6, E1-8, E1-10, Comparative Examples EC1-2 to EC1-5]

For each of Examples E1-4 to E1-6, E1-8 and E1-10, and Comparative Examples EC1-2 to EC1-5, a methacrylic resin containing one of methacrylic copolymers (A-4) to (A-6), (A-8), (A-10), and (AC-2) to (AC-5) each containing the

methyl methacrylate (MMA) unit and the α-methylstyrene (αMSt) unit was obtained by a method similar to that for Example E1-1, except that the preparation composition and/or the polymerization conditions were changed. Tables 1 to 3 show the main manufacturing conditions and evaluation results.

[Examples E1-2, E1-3, E1-7, E1-9, E1-11, E1-12, Comparative Examples EC1-1, EC1-6, EC1-7]

For each of Examples E1-2, E1-3, E1-7, E1-9, E1-11 and E1-12, and Comparative Examples EC1-1, EC1-6 and EC1-7, a methacrylic resin containing one of methacrylic copolymers (A-2), (A-3), (A-7), (A-9), (A-11), (A-12), (AC-1), (AC-6), and (AC-7) each containing the methyl methacrylate (MMA) unit and the α-methylstyrene (αMSt) unit was obtained by a method similar to that for Example E1-1, except that the preparation composition and/or polymerization conditions were changed, and at least one type of additive was added after the polymerization as follows.

At least one type of additive was charged in an additive preparation tank, and oxygen and water were removed by repeating a pressure operation in which the pressure was increased to 0.2 MPa and then decreased to the atmospheric pressure four times in total, and by doing so, the oxygen concentration in the additive preparation tank was reduced to 0%. Next, the at least one type of additive charged into the additive preparation tank was melted by heating it to a temperature higher than its melting point and stirring it for 2 hours. The obtained liquid additive(s) was filtered by using a metal filter ("FLHF 200-10M3F" manufactured by PALL) having a mesh opening of 0.2 μm, and injected into the extruder through the additive input port by using a metering pump.

For example, in Example E1-2, the type of at least one type of additive added after the polymerization, and the amount of each additive based on 100 mass% of the resin were as follows.

(PEP-36) 1,000 ppm,
(StMg) 1,000 ppm,
(StOH) 2,000 ppm.

Tables 1 to 3 show the main manufacturing conditions and evaluation results. In the table, the amount of the additive(s) added in the raw material composition after the polymerization is an amount based on 100 mass% of the resin.

[Table 1]

| Example | | | | E1-1 | E1-2 | E1-3 | E1-4 | E1-5 | E1-6 |
|---|---|---|---|---|---|---|---|---|---|
| Raw material composition | | | | | | | | | |
| | Monomer | MMA | mass% | 85 | 85 | 80 | 60 | 65 | 65 |
| | | αMSt | mass% | 15 | 15 | 20 | 31 | 28 | 28 |
| | | St | mass% | | | | 9 | 7 | 7 |
| | | Mah | mass% | | | | | | |
| | | ChMI | mass% | | | | | | |
| | Initiator | AIBN | ppm | 500 | 500 | 500 | 500 | 500 | 500 |
| | Chain transfer agent | n-OM | ppm | 400 | 400 | 400 | 100 | 100 | 100 |
| | Organic disulfide compound (D) (added before polymerization) | DDS | ppm | 300 | 1000 | 500 | 300 | 500 | 700 |
| | Organophosphate (P) (added after polymerization) | PEP-36 | ppm | | 1000 | | | | |
| | | TPP | ppm | | | 100 | | | |
| | Phenolic antioxidant (added after polymerization) | GS | ppm | | | | | | |
| | Lubricant (L) (added after polymerization) | StMg | ppm | | 1000 | | | | |
| | | StOH | ppm | | 2000 | | | | |

(continued)

| Example | | | E1-1 | E1-2 | E1-3 | E1-4 | E1-5 | E1-6 |
|---|---|---|---|---|---|---|---|---|
| Raw material composition | | | | | | | | |
| Polymerization condition | Polymerization temperature | °C | 120 | 120 | 120 | 150 | 140 | 140 |
| | Mean residence time | hr | 3.3 | 3.3 | 3.5 | 3 | 3 | 3 |
| Polymerization conversion rate | | % | 30 | 31 | 32 | 43 | 37 | 37 |
| Methacrylic resin composition | | | | | | | | |
| Methacrylic copolymer (A) | | | A-1 | A-2 | A-3 | A-4 | A-5 | A-6 |
| Unit composition of copolymer | MMA | mass% | 91 | 91 | 89 | 74 | 77 | 77 |
| | αMSt | mass% | 9 | 9 | 11 | 18 | 16 | 16 |
| | St | mass% | | | | 8 | 7 | 7 |
| | Mah | mass% | | | | | | |
| | ChMI | mass% | | | | | | |
| Remaining amount of raw monomer | MMA | mass% | 0.60 | 0.31 | 0.45 | 0.11 | 0.06 | 0.05 |
| | αMSt | mass% | 0.15 | 0.16 | 0.30 | 0.35 | 0.44 | 0.42 |
| | St | mass% | | | | 0 | 0 | 0 |
| | Mah | mass% | | | | | | |
| | ChMI | mass% | | | | | | |
| | Total amount | mass% | 0.75 | 0.47 | 0.75 | 0.46 | 0.50 | 0.47 |
| Amount of organic disulfide compound (D) in methacrylic resin composution methacrylic resin | | ppm | 90 | 360 | 310 | 280 | 610 | 750 |
| Physical property evaluation result | | | | | | | | |
| Mw | | - | 102000 | 105000 | 99000 | 86000 | 90800 | 90200 |
| Mw/Mn | | - | 2.0 | 2.0 | 2.0 | 2.0 | 2.0 | 2.0 |
| Tg | | °C | 130 | 132 | 134 | 125 | 123 | 123 |
| 1% weight loss temperature | | °C | 290 | 294 | 285 | 294 | 301 | 302 |
| MFR MFR | | g/10min | 1.5 | 1.3 | 1.2 | 5.5 | 5.8 | 6.5 |
| Stability during heated retention | | g/ | B | A | A | B | A | A |
| HDT | | °C | 111 | 113 | 115 | 117 | 114 | 114 |
| YI value | | - | 3.1 | 3.5 | 2.8 | 1.5 | 2.1 | 2.3 |

[Table 2]

| Example | | | | E1-7 | E1-8 | E1-9 | E1-10 | E1-11 | E1-12 |
|---|---|---|---|---|---|---|---|---|---|
| Raw material composition | | | | | | | | | |
| | Monomer | MMA | mass% | 65 | 30 | 82 | 78 | 65 | 85 |
| | | αMSt | mass% | 28 | 52 | 15 | 18 | 28 | 15 |
| | | St | mass% | 7 | 28 | | | 7 | |
| | | Mah | mass% | | | 3 | | | |
| | | ChMI | mass% | | | | 4 | | |
| | Initiator | AIBN | ppm | 500 | 600 | 300 | 300 | 500 | 500 |
| | Chain transfer agent | n-OM | ppm | 100 | | 200 | 200 | 100 | 400 |
| | Organic disulfide compound (D) (added before polymerization) | DDS | ppm | 300 | 500 | 200 | 300 | 1000 | 1000 |
| | Organophosphate (P) (added after polymerization) | PEP-36 | ppm | 1000 | | | | 1000 | 1000 |
| | | TPP | ppm | | | | | | |
| | Phenolic antioxidant (added after polymerization) | GS | ppm | | | | | | |
| | Lubricant (L) (added after polymerization) | StMg | ppm | 1000 | | | | | |
| | | StOH | ppm | 3000 | | 1000 | | | |
| Polymerization condition | | Polymerization temperature | °C | 140 | 150 | 130 | 130 | 140 | 120 |
| | | Mean residence time | hr | 3 | 3.3 | 2.5 | 2.5 | 3 | 3.3 |
| Polymerization conversion rate | | | % | 37 | 40 | 40 | 40 | 37 | 31 |
| Methacrylic resin composition | | | | | | | | | |
| Methacrylic copolymer (A) | | | | A-7 | A-8 | A-9 | A-10 | A-11 | A-12 |
| | Unit composition of copolymer | MMA | mass% | 77 | 45 | 84 | 84 | 76 | 91 |
| | | αMSt | mass% | 16 | 30 | 15 | 15 | 16 | 9 |
| | | St | mass% | 7 | 25 | | | 8 | |
| | | Mah | mass% | | | 1 | | | |
| | | ChMI | mass% | | | | 1 | | |
| | Remaining amount of raw monomer | MMA | mass% | 0.14 | 0.07 | 0.27 | 0.19 | 0.04 | 0.31 |
| | | αMSt | mass% | 0.26 | 0.58 | 0.18 | 0.22 | 0.38 | 0.16 |
| | | St | mass% | 0 | 0.02 | | | 0 | |
| | | Mah | mass% | | | 0.06 | | | |
| | | ChMI | mass% | | | | 0.09 | | |
| | | Total amount | mass% | 0.40 | 0.67 | 0.51 | 0.50 | 0.42 | 0.47 |
| | Amount of organic disulfide compound (D) in methacrylic resin composition | | ppm | 310 | 490 | 250 | 200 | 670 | 360 |

(continued)

| Physical property evaluation result | | | | | | | | |
|---|---|---|---|---|---|---|---|---|
| | Mw | - | 86000 | 83000 | 86900 | 86500 | 88000 | 105000 |
| | Mw/Mn | - | 2.0 | 2.0 | 1.9 | 1.9 | 2.0 | 2.0 |
| | Tg | °C | 124 | 126 | 130 | 129 | 124 | 132 |
| | 1% weight loss temperature | °C | 280 | 291 | 302 | 300 | 304 | 294 |
| | MFR | g/10min | 8.0 | 5.2 | 2.1 | 2.2 | 6.0 | 1.3 |
| | Stability during heated retention | | B | A | B | B | B | B |
| | HDT | °C | 115 | 118 | 121 | 120 | 112 | 112 |
| | YI value | - | 2.3 | 29 | 3.8 | 3.9 | 3.0 | 3.5 |

[Table 3]

| Comparative example | | | | EC1-1 | EC1-2 | EC1-3 | EC1-4 | EC1-5 | EC1-6 | EC1-7 |
|---|---|---|---|---|---|---|---|---|---|---|
| Raw material composition | | | | | | | | | | |
| | Monomer | MMA | mass% | 85 | 80 | 65 | 5 | 65 | 78 | 65 |
| | | αMSt | mass% | 15 | 20 | 28 | 60 | 28 | 17 | 28 |
| | | St | mass% | | | 7 | 35 | 7 | 5 | 7 |
| | | Mah | mass% | | | | | | | |
| | | ChMI | mass% | | | | | | | |
| | Initiator | AIBN | ppm | 500 | 500 | 500 | 1000 | 500 | 400 | 700 |
| | Chain transfer agent | n-OM | ppm | 400 | 400 | 100 | 500 | 100 | 530 | 100 |
| | Organic disulfide compound (D) (added before polymerization) | DDS | ppm | | 30 | | 2000 | 2000 | | |
| | Organophosphate (P) | PEP-36 | ppm | | | | | | 3600 | |
| | (added after polymerization) | TPP | ppm | | | | | | | |
| | Phenolic antioxidant (added after polymerization) | GS | ppm | 10000 | | | | | | 3000 |
| | Lubricant (L) | StMg | ppm | | | | | | | |
| | (added after polymerization) | StOH | ppm | | | | | | | |
| Polymerization condition | | Polymerization temperature | °C | 120 | 120 | 140 | 130 | 140 | 140 | 140 |
| | | Mean residence time | hr | 3.3 | 3.5 | 3 | 2.5 | 3 | 2.5 | 3 |
| Polymerization conversion rate | | | % | 32 | 32 | 36 | 31 | 37 | 39 | 36 |

(continued)

| Methacrylic resin composition | | | | | | | | | | |
|---|---|---|---|---|---|---|---|---|---|---|
| Methacrylic copolymer (AC) | | | | AC-1 | AC-2 | AC-3 | AC-4 | AC-5 | AC-6 | AC-7 |
| | Unit composition of copolymer | MMA | mass% | 88 | 86 | 77 | 10 | 76 | 85 | 77 |
| | | αMSt | mass% | 12 | 14 | 15 | 45 | 16 | 10 | 16 |
| | | St | mass% | | | 8 | 45 | 8 | 5 | 7 |
| | | Mah | mass% | | | | | | | |
| | | ChMI | mass% | | | | | | | |
| | Remaining amount of raw monomer | MMA | mass% | 0.82 | 0.75 | 1.44 | 0 | 0.04 | 0.87 | 0.76 |
| | | αMSt | mass% | 0.29 | 0.35 | 0.35 | 0.75 | 0.4 | 0.16 | 0.2 |
| | | St | mass% | | | 0.18 | 0.4 | 0 | 0.05 | 0.11 |
| | | Mah | mass% | | | | | | | |
| | | ChMI | mass% | | | | | | | |
| | | Total amount | mass% | 1.11 | 1.10 | 1.97 | 1.15 | 0.44 | 1.08 | 1.07 |
| | Amount of organic disulfide compound (D) in methacrylic resin composition | | ppm | 0 | 0 | 0 | 400 | 2560 | 0 | 0 |
| Physical property evaluation result | | | | | | | | | | |
| | Mw | | - | 82000 | 80000 | 87000 | 55000 | 91000 | 92000 | 69000 |
| | Mw/Mn | | - | 2.0 | 2.1 | 2.0 | 2.0 | 2.0 | 2.0 | 1.9 |
| | Tg | | °C | 127 | 129 | 117 | 100 | 124 | 114 | 116 |
| | 1% weight loss temperature | | °C | 283 | 272 | 242 | 220 | 305 | 262 | 268 |
| | MFR | | g/10min | 1.9 | 1.6 | 15.0 | 5.2 | 5.9 | 6.1 | 11.8 |
| | Stability during heated retention | | | C | D | D | D | A | D | D |
| | HDT | | °C | 102 | 103 | 96 | 73 | 116 | 96 | 99 |
| | YI value | | - | 4.9 | 4.1 | 1.4 | 3.1 | 16.2 | 1.4 | 2.1 |

[Summary of Results]

In each of Examples E1-1 to E1-12, a methacrylic resin composition containing a methacrylic copolymer (A) consisting of 10 to 99 mass% of a methyl methacrylate (MMA) unit, 1 to 40 mass% of an isopropenyl aromatic compound unit (UI), and 0 to 60 mass% of other units (UO) was obtained. In each of these Examples, an appropriate amount of an organic disulfide compound (D) was added to the polymerization raw material, and a methacrylic resin composition containing 1 to 1,000 ppm of organic disulfide compound (D) was finally obtained. In all of the methacrylic resin compositions obtained in these examples, the total remaining amount of the raw material monomers was 0 to 1.00 mass%.

In all of the methacrylic resin compositions obtained in these examples, Tg was 120°C or higher; 1% thermal weight loss temperature was 270°C or higher (280°C or higher); and heat resistance and heat decomposition resistance (thermal stability) were excellent.

In all of the methacrylic resin compositions obtained in these examples, the melt flow rate (MFR) was excellent; the thermal stability was excellent even when the resin composition was retained in the heated state during the molding process; and the moldability was excellent.

In all of the methacrylic resin compositions obtained in these examples, the heat deflection temperature (HDT) was 105°C or higher (110°C or higher), and the heat resistance and the rigidity under a load were excellent.

In all of the methacrylic resin compositions obtained in these examples, the yellow index (YI) value was 5.0 or lower (4.0 or lower), and the discoloration (e.g., yellowing) was suppressed.

All of the methacrylic resin compositions obtained in these examples were suitable for optical members; and members for vehicles such as automobiles.

In each of Comparative Examples EC1-1 to EC1-3, EC1-6 and EC1-7, a methacrylic resin composition

containing a methacrylic copolymer (AC) was obtained. In these comparative examples, since the amount of the organic disulfide compound (D) added to the polymerization raw material was 0 ppm or insufficient, the content of the organic disulfide compound (D) in the finally obtained methacrylic resin composition was 0 ppm.

In all of the methacrylic resin compositions obtained in these comparative examples, the total remaining amount of raw material monomers of the methacrylic copolymer (AC) was more than 1.00 mass%.

In all of the methacrylic resin compositions obtained in these comparative examples, the heat resistance and/or the heat decomposition resistance (thermal stability) were poor, and at least one of the Tg, the 1% thermal weight loss temperature, the heat deflection temperature (HDT), and the stability during the heated retention was poor.

In Comparative Example EC1-4, a methacrylic resin composition containing a methacrylic copolymer (AC) of which the content of the isopropenyl aromatic compound unit (UI) was more than 40 mass% was obtained. In this comparative example, an appropriate amount of an organic disulfide compound (D) was added to the polymerization raw material, and a methacrylic resin composition containing 1 to 1,000 ppm of organic disulfide compound (D) was finally obtained.

In the methacrylic resin composition obtained in this comparative example, the total remaining amount of the raw material monomers of the methacrylic copolymer (AC) was more than 1.00 mass%. In the methacrylic resin composition obtained in this comparative example, the heat resistance and/or the heat decomposition resistance (thermal stability) were poor, and the Tg, the 1% thermal weight loss temperature, the heat deflection temperature (HDT), and the stability during the heated retention were poor.

In Comparative Example EC1-5, a methacrylic resin composition containing a methacrylic copolymer (AC) was obtained. In this comparative example, the organic disulfide compound (D) was added to the polymerization raw material, and a methacrylic resin composition containing more than 1,000 ppm of organic disulfide compound (D) was finally obtained.

In the methacrylic resin composition obtained in this comparative example, the total remaining amount of the raw material monomers was 0 to 1.00 mass%, and the heat resistance and the heat decomposition resistance (thermal stability) were excellent. However, the yellow index (YI) value of the obtained methacrylic resin composition was higher than 10.0, and hence it was defective.

[Example E2-11] Manufacturing of DDS-Added Methacrylic Copolymer (AD-11)

65 mass parts of purified methyl methacrylate (MMA), 35 mass parts of $\alpha$-methylstyrene ($\alpha$MSt), 400 ppm of n-octylmercaptan (n-OM) as a chain transfer agent, and 900 ppm of di-tert-dodecyl disulfide (DDS) were charged into an autoclave equipped with a stirrer and a collection tube, and were uniformly mixed. A polymerization raw material was obtained by adding 500 ppm of 2,2'-azobis (2-methylpropionitrile) (AIBN) to this mixture as a polymerization initiator, and uniformly mixing the mixture. A nitrogen gas was blown into this polymerization raw material, and the dissolved oxygen concentration was thereby adjusted to 3 ppm.

Next, a continuous flow tank-type reactor equipped with a brine chiller condenser was prepared, and the inside of this reactor was replaced with nitrogen gas. The above-described polymerization raw material was continuously fed into this reactor at a constant flow rate so that the average residence time became 4.0 hours. Then, bulk polymerization was carried out at a polymerization temperature of 120°C, and a resin solution containing a methacrylic copolymer, which was the reaction product, was continuously discharged from the reactor. Note that the pressure inside the reactor was controlled by a pressure control valve connected to the brine chiller condenser. The polymerization conversion rate was 28%.

A twin-screw extruder including a resin input port through which the above-described resin solution discharged from the reactor is charged, a die including a resin discharge port for discharging a manufactured resin, a first vent (also referred to as a rear vent) located relatively close to the resin input port, a second vent (also referred to as a front vent) located relatively close to the resin discharge port, and an additive supply port located between the second vent (front vent) and the resin discharge port was prepared.

The above-described resin solution discharged from the reactor was heated by using a heat exchanger, and then supplied to the above-described extruder through the resin supply port. The set temperature of the heat exchanger was adjusted to 200°C, and the set temperature of the cylinder of the extruder was adjusted to 255°C. From the resin solution supplied into the cylinder of the extruder, volatile components consisting mainly of unreacted monomers were flash-evaporated and discharged through the first vent (rear vent). Further, the resin was conveyed in the axial direction of the cylinder by a screw, and the volatile components evaporated during the conveyance were discharged through the second vent (front vent).

The obtained strands were cut by using a pelletizer Pellets of the DDS-added methacrylic copolymer (AD-11) were obtained through the above-described series of processes. The unit composition of the copolymer, the content of DDS in the DDS-added methacrylic copolymer (AD), and results of evaluation of physical properties are shown in Table 4.

[Example E2-12] Manufacturing of DDS-Added Methacrylic Copolymer (AD-12)

Pellets of a DDS-added methacrylic copolymer (AD-12) were obtained in a manner similar to that for Example E2-11, except that: the preparation composition was changed to 69 mass parts of methyl methacrylate (MMA), 25 mass parts of α-methylstyrene (αSt), 6 mass parts of styrene (St), 100 ppm of n-octylmercaptan (n-OM), and 500 ppm of di-tert-dodecyl disulfide (DDS); the average residence time was changed to 3.0 hours; and the polymerization temperature was changed to 140°C. The unit composition of the copolymer, the content of DDS in the DDS-added methacrylic copolymer (AD), and results of evaluation of physical properties are shown in Table 4.

[Example E2-13] Manufacturing of DDS-Added Methacrylic Copolymer (AD-13)

Pellets of a DDS-added methacrylic copolymer (AD-13) were obtained in a manner similar to that for Example E2-11 except that: the preparation composition was changed to 75 mass parts of methyl methacrylate (MMA), 15 mass parts of α-methylstyrene (αMSt), 10 mass parts of maleic anhydride (Mah), 200 ppm of n-octylmercaptan (n-OM), and 300 ppm of di-tert-dodecyl disulfide (DDS); the amount of 2,2'-azobis (2-methylpropionitrile) (AIBN) was changed to 300 ppm; the average residence time was changed to 2.5 hours; and the polymerization temperature was changed to 130°C. The unit composition of the copolymer, the content of DDS in the DDS-added methacrylic copolymer (AD), and results of evaluation of physical properties are shown in Table 4.

[Example E2-14] Manufacturing of DDS-Added Methacrylic Copolymer (AD-14)

Pellets of a DDS-added methacrylic copolymer (AD-14) were obtained in a manner similar to that for Example E2-11 except that: the preparation composition was changed to 60 mass parts of methyl methacrylate (MMA), 23 mass parts of α-methylstyrene (αMSt), 17 mass parts of cyclohexylmaleimide (ChMI), 300 ppm of n-octylmercaptan (n-OM), and 400 ppm of di-tert-dodecyl disulfide (DDS); the amount of 2,2'-azobis (2-methylpropionitrile) (AIBN) was changed to 300 ppm; the average residence time was changed to 3.0 hours; and the polymerization temperature was changed to 130°C. The unit composition of the copolymer, the content of DDS in the DDS-added methacrylic copolymer (AD), and results of evaluation of physical properties are shown in Table 4.

[Example E2-15] Manufacturing of DDS-Added Methacrylic Copolymer (AD-15)

(Manufacturing Process of Precursor Resin)

Pellets of a DDS-added methacrylic copolymer (AD-15-Pre) (precursor resin) were obtained in a manner similar to that for Example E2-11 except that: the preparation composition was changed to 78 mass parts of methyl methacrylate (MMA), 17 mass parts of α-methylstyrene (αMSt), 5 mass parts of styrene (St), 530 ppm of n-octylmercaptan (n-OM), and 500 ppm of di-tert-dodecyl disulfide (DDS); the amount of 2,2'-azobis (2-methylpropionitrile) (AIBN) was changed to 400 ppm; the average residence time was changed to 3.0 hours; and the polymerization temperature was changed to 140°C. The unit composition of this DDS-added methacrylic copolymer (AD-15 Pre) was 75 mass% of methyl methacrylate (MMA) unit/10 mass% of α-methylstyrene (αMSt) unit/5 mass% of styrene (St) unit, and the content of the DDS was 610 ppm.

(Glutarimide Cyclization Step)

A twin-screw extruder ("TEX 30α-77AW-3V" manufactured by Japan Steel Works, Ltd.) including a transport unit, a melting and kneading unit, a devolatilization unit, and a discharge unit, of which the screw rotation speed was set to 150 rpm and the temperature was set to 210 to 270°C, was prepared. Pellets of the DDS-added methacrylic copolymer (AD-15 Pre) (precursor resin) were supplied to the transport unit of this twin-screw extruder at a rate of 15 kg/hr, and monomethylamine was injected, as an imidizing agent, from the additive supply port of the twin-screw extruder in such an amount that the content of the methyl glutarimide (MeGI) unit became equal to the amount shown in Table 4. The precursor resin and the monomethylamine were reacted with each other in the melting and kneading unit, which included a kneading block. By-products and excess monomethylamine were volatilized from the obtained molten resin in the devolatilization unit and discharged through a plurality of vents.

Pellets of the DDS-added methacrylic copolymer (AD-15) were obtained by extruding the molten resin, from a die provided at the end of the discharge unit of the twin-screw extruder, into strands, cooling the strands in a water bath, and cutting the cooled strands by using a pelletizer. The unit composition of the copolymer, the content of DDS in the DDS-added methacrylic copolymer (AD), and results of evaluation of physical properties are shown in Table 4.

[Example E2-16] Manufacturing of DDS-Added Methacrylic Copolymer (AD-16)

(Manufacturing Process of Precursor Resin)

Pellets of a DDS-added methacrylic copolymer (AD-16-Pre) (precursor resin) were obtained in a manner similar to that for Example E2-11 except that: the preparation composition was changed to 65 mass parts of methyl methacrylate (MMA), 28 mass parts of α-methylstyrene (αMSt), 7 mass parts of styrene (St), 100 ppm of n-octylmercaptan (n-OM), and 700 ppm of di-tert-dodecyl disulfide (DDS); the average residence time was changed to 3.0 hours; and the polymerization temperature was changed to 140°C. The unit composition of this DDS-added methacrylic copolymer (AD-16 Pre) was 77 mass% of methyl methacrylate (MMA) unit/16 mass% of α-methylstyrene (αMSt) unit/7 mass% of styrene (St) unit, and the content of the DDS was 750 ppm.

(Glutarimide Cyclization Step)

Pellets of the DDS-added methacrylic copolymer (AD-16 Pre) were obtained in a manner similar to that for Example E2-15 except that: the DDS-added methacrylic copolymer (AD-16 Pre) was used as the precursor resin and the amount of monomethylamine as an imidizing agent was changed. The unit composition of the copolymer, the content of DDS in the DDS-added methacrylic copolymer (AD), and results of evaluation of physical properties are shown in Table 4.

[Comparative Example EC2-17] Manufacturing of Methacrylic Copolymer (AC-17)

Pellets of a methacrylic copolymer (AC-17) containing no DDS for comparison were obtained in a manner similar to that for Example E2-11 except that di-tert-dodecyl disulfide (DDS) was not used. The unit composition of the copolymer, the content of DDS in the methacrylic copolymer (AC), and results of evaluation of physical properties are shown in Table 4.

[Comparative Example EC2-18] Manufacturing of Methacrylic Copolymer (AC-18)

Pellets of a methacrylic copolymer (AC-18) (a methyl methacrylate-styrene-cyclohexylmaleimide-phenylmaleimide copolymer, an MMA-St-ChMI-PhMI copolymer) containing no DDS were obtained in a manner similar to that for Reference Example 1 disclosed in Patent Literature 2 cited in the [Background Art] section, except that the mass ratio of the preparation monomers was adjusted. The unit composition of the copolymer, the content of DDS in the methacrylic copolymer (AC), and results of evaluation of physical properties are shown in Table 4.

[Manufacturing Example PE1] Manufacturing of Graft Copolymer (B-1)

A latex containing 31.5 kg of polybutadiene particles (particle diameter 0.34 μm) in terms of solid content was charged into an autoclave equipped with a stirrer and having an internal volume of 200 L. Then, 98 kg of pure water was added, and the temperature was raised to 50°C in a nitrogen stream while stirring the mixture. Next, 2 kg of an aqueous solution in which 1.25g of ferrous sulfate, 2.5 g of sodium ethylenediamine tetraacetate, and 100 g of sodium formaldehyde sulfoxylate dihydrate (Rongalit) were dissolved was added to pure water, and the mixture was stirred and mixed. Next, a monomer mixture consisting of 15.4 kg of methyl methacrylate (MMA), 5.7 kg of styrene (St), 7.4 kg of acrylonitrile (AN), and 60 g of t-dodecyl mercaptan was added to the above-described solution while stirring the mixture, and 8 kg of a dispersion liquid in which 450 g of potassium oleate was dissolved and 120 g of diisopropylbenzene hydroperoxide was dispersed in pure water were continuously dropped over six hours by using their respective dropping pumps. After the addition of them was completed, the temperature of the reaction solution was raised to 70°C. Further, 30 g of diisopropylbenzene hydroperoxide was added, and the mixture was kept for 2 hours while stirring it and the polymerization was thereby completed.

An antioxidant was added to the obtained latex, and its solid content was diluted to 15 mass% with pure water at a normal temperature (10 to 30°C). Then the temperature was raised to 60°C. A powdered graft copolymer (B-1) was obtained by, after adding dilute sulfuric acid while vigorous stirring the mixture, and thereby performing salting-out, solidifying the mixture by raising the temperature to 90°C, dehydrating the mixture, washing the mixture with water, and drying the mixture.

The obtained graft copolymer (B-1) was core shell-type graft copolymer particles in which surfaces of at least some of core particles consisting of polybutadiene particles were coated with a shell layer (graft layer) consisting of the methacrylic copolymer. The refractive index ($n_b$) was 1.518; the composition of the graft layer was 54 mass% of methyl methacrylate (MMA) unit/20 mass% of styrene (St) unit/26 mass% acrylonitrile (AN) unit; and the volume-average particle diameter (d50) was 0.36 μm.

[Manufacturing Example PE2] Manufacturing of Graft Copolymer (B-2)

A powdered graft copolymer (B-2) was obtained in a manner similar to that for Manufacturing Example PE1, except that the monomer mixture was changed to a monomer mixture consisting of 22.2 kg of methyl methacrylate (MMA), 6.3 kg of styrene (St), and 60g of t-dodecyl mercaptan.

The obtained graft copolymer (B-2) was core shell-type graft copolymer particles in which surfaces of at least some of core particles consisting of polybutadiene particles were coated with a shell layer (graft layer) consisting of the methacrylic copolymer. The refractive index ($n_b$) was 1.518; the composition of the graft layer was 78 mass% of methyl methacrylate (MMA) unit/22 mass% of styrene (St) unit, and the volume-average particle diameter (d50) was 0.36 μm.

[Manufacturing Example PE3] Manufacturing of Graft Copolymer (B-3)

A latex containing 36 kg of styrene-butadiene copolymer particles (styrene unit/butadiene unit (mass ratio) = 30/70, particle diameter 0.30 μm) was charged into an autoclave equipped with a stirrer and having an internal volume of 200 L. Then, pure water was added, and the temperature was raised to 50°C in a nitrogen stream while stirring the mixture. The total amount of water in the latex and the amount of added pure water was adjusted to 100 kg. Next, 2 kg of an aqueous solution in which 1.8 g of ferrous sulfate, 3.6 g of sodium ethylenediamine tetraacetate, and 108 g of sodium formaldehyde sulfoxylate dihydrate (Rongalit) were dissolved was added to pure water, and the mixture was stirred and mixed. Next, a monomer mixture consisting of 13.2 kg of methyl methacrylate (MMA), 10.8 kg of styrene (St), and 240 g of t-dodecyl mercaptan was added to the above-described solution while stirring the mixture, and 8 kg of a dispersion liquid in which 450g of potassium oleate was dissolved and 48g of diisopropylbenzene hydroperoxide was dispersed in pure water were continuously dropped over six hours by using their respective dropping pumps. After the addition of them was completed, the temperature of the reaction solution was raised to 70°C. Further, 24 g of diisopropylbenzene hydroperoxide was added, and the mixture was kept for 2 hours while stirring it and the polymerization was thereby completed.

An antioxidant was added to the obtained latex, and its solid content was diluted to 15 mass% with pure water at a normal temperature (10 to 30°C). Then the temperature was raised to 70°C. A powdered graft copolymer (B-3) was obtained by, after adding dilute sulfuric acid while vigorous stirring the mixture, and thereby performing salting-out, solidifying the mixture by raising the temperature to 95°C, dehydrating the mixture, washing the mixture with water, and drying the mixture.

The obtained graft copolymer (B-3) was core shell-type graft copolymer particles in which surfaces of at least some of core particles consisting of styrene-butadiene copolymer particles were coated with a shell layer (graft layer) consisting of the methacrylic copolymer. The refractive index ($n_b$) was 1.540; the composition of the graft layer was 55 mass% of methyl methacrylate (MMA) unit/45 mass% of styrene (St) unit; and the volume-average particle diameter (d50) was 0.35 μm.

[Manufacturing Example PE4] Manufacturing of Methacrylic Copolymer (C-1)

Methyl-methacrylate-acrylonitrile copolymer (MMA-St-AN) was polymerized as a methacrylic copolymer (C-1) in a manner similar to Reference Examples 1 to 4 disclosed in Japanese Unexamined Patent Application Publication No. H7-324153, except that the mass ratio of the preparation monomers was adjusted. The unit composition of the obtained copolymer was 54 mass% of methyl methacrylate (MMA) unit/20 mass% of styrene (St) unit/26 mass% of acrylonitrile (AN) unit. The weight-average molecular weight (Mw) was 84,000; the glass transition temperature (Tg) was 101°C; and the refractive index ($n_c$) was 1.517.

[Manufacturing Example PE5] Manufacturing of Methacrylic Copolymer (C-2)

Methyl-methacrylate-styrene copolymer (MMA-St copolymer) was polymerized as a methacrylic copolymer (C-2) in a manner similar to that for Example (B)-1 disclosed in Patent Literature 3 cited in the [Background Art] section, except that the mass ratio of the preparation monomers was adjusted. The unit composition of the obtained copolymer was 75 mass% of methyl methacrylate (MMA) unit/25 mass% of styrene (St) unit. The weight-average molecular weight (Mw) was 115,000; the glass transition temperature (Tg) was 104°C; and the refractive index ($n_c$) was 1.520.

[Examples E2-1 to E2-9, Comparative Examples EC2-1 to EC2-5]

In each of Examples E2-1 to E2-9 and Comparative Examples EC2-1 to EC2-5, a methacrylic resin composition (R) or (RC) was obtained by mixing a DDS-added methacrylic copolymer (AD) or a methacrylic copolymer (AC) for comparison, a graft copolymer (B), and a methacrylic copolymer (C) in a formulation shown in Table 5 or 6, and melting and kneading the mixture at 245°C by using a twin-screw extruder having L/D=32.5 and an axial diameter of 62.5 mmφ, and

extruding the kneaded mixture. Note that L/D is a ratio of the effective length (L) of the screw to the diameter (D) of the screw. Results of evaluation of physical properties are shown in Tables 5 and 6. In these tables, conditions that are not shown in the tables are the same as each other.

[Table 4]

| Example or Comparative example | | | | E2-11 | E2-12 | E2-13 | E2-14 | E2-15 | E2-16 | EC2-17 | EC2-18 |
|---|---|---|---|---|---|---|---|---|---|---|---|
| DDS-added methacrylic copolymer (AD) | | | | AD-11 | AD-12 | AD-13 | AD-14 | AD-15 | AD-16 | | |
| Methacrylic copolymer (AC) | | | | | | | | | | AC-17 | AC-18 |
| | Unit composition of copolymer | MMA | mass% | 80 | 80 | 75 | 67 | 69 | 28 | 80 | 68 |
| | | αMSt | mass% | 20 | 14 | 20 | 18 | 10 | 16 | 20 | |
| | | St | mass% | | 6 | | | 5 | 7 | | 7 |
| | | Mah | mass% | | | 5 | | | | | |
| | | ChMI | mass% | | | | 15 | | | | 10 |
| | | PhMI | mass% | | | | | | | | 15 |
| | | MeGI | mass% | | | | | 16 | 49 | | |
| | Amount of organic disulfide compound (D) in (AD) or (AC) | | ppm | 800 | 610 | 350 | 300 | 200 | 100 | 0 | 0 |
| Physical property evaluation result | | | | | | | | | | | |
| | Mw | | - | 82000 | 91000 | 87000 | 83000 | 98000 | 89000 | 80000 | 230000 |
| | Tg | | °C | 143 | 123 | 148 | 145 | 136 | 147 | 138 | 144 |
| | Refractive index ($n_a$) | | - | 1.518 | 1.518 | 1.519 | 1.519 | 1.519 | 1.539 | 1.518 | 1.517 |
| | 1% weight loss temperature | | °C | 280 | 301 | 305 | 290 | 316 | 346 | 243 | 300 |
| | HDT | | °C | 124 | 113 | 130 | 129 | 121 | 140 | 118 | 125 |
| | Pencil hardness (load 750 g) | | - | 2H | H | 3H | 3H | 3H | 4H | H | 2H |
| | Charpy impact strength (notched test piece, 23°C) | | kJ/m2 | 1.2 | 1.2 | 1.2 | 1.0 | 1.3 | 1.1 | 1.2 | 0.6 |

[Table 5]

| | | | | | Example | | | | | | | | |
|---|---|---|---|---|---|---|---|---|---|---|---|---|---|
| | | | | | E2-1 | E2-2 | E2-3 | E2-4 | E2-5 | E2-6 | E2-7 | E2-8 | E2-9 |
| Methacrylic resin composition | | | | | R1 | R2 | R3 | R4 | R5 | R6 | R7 | R8 | R9 |
| Mixing composition | | | Refractive index n | Amount (ppm) of (D) in (AD) | | | | | | | | | |
| | DDS-added methacrylic copolymer (AD) | AD-11 | 1.518 | 800 | 70 | | | | | | | | |
| | | AD-12 | 1.518 | 610 | | 30 | 50 | 82 | 20 | | | | |
| | | AD-13 | 1.519 | 350 | | | | | | 82 | | | |
| | | AD-14 | 1.519 | 300 | | | | | | | 82 | | |
| | | AD-15 | 1.519 | 200 | | | | | | | | 82 | |
| | | AD-16 | 1.539 | 100 | | | | | | | | | 76 |
| | Graft copolymer (B) | B-1 | 1.518 | | 30 | 18 | 13 | | | | | | |
| | | B-2 | 1.518 | | | | | 18 | 24 | 18 | 18 | 18 | |
| | | B-3 | 1.540 | | | | | | | | | | 24 |
| | Methacrylic copolymer (C) | C-1 | 1.517 | | | 52 | 37 | | | | | | |
| | | C-2 | 1.520 | | | | | | 56 | | | | |
| | Amount of organic disulfide compound (D) in methacrylic resin composition | | | ppm | 510 | 133 | 255 | 450 | 72 | 237 | 196 | 114 | 26 |
| Physical property evaluation result | | | | | | | | | | | | | |
| | nm | | | - | 1.518 | 1.517 | 1.518 | 1.518 | 1.519 | 1.519 | 1.519 | 1.519 | 1.539 |
| | \|nb-nm\| | | | - | 0.000 | 0.001 | 0.000 | 0.000 | 0.001 | 0.001 | 0.001 | 0.001 | 0.001 |
| | Haze | | | % | 3 | 2 | 3 | 2 | 3 | 3 | 4 | 4 | 4 |
| | HDT | | | °C | 88 | 89 | 103 | 98 | 88 | 107 | 103 | 104 | 108 |
| | Pencil hardness (load 500 g) | | | - | HB | HB | F | F | HB | H | H | H | H |
| | Charpy impact strength (notched test piece) | | 23°C | kJ/m2 | 13.3 | 7.7 | 5.0 | 7.5 | 11.0 | 7.1 | 6.8 | 7.0 | 11.9 |
| | | | -30°C | kJ/m2 | 7.2 | 4.8 | 4.4 | 4.2 | 5.7 | 4.3 | 4.1 | 4.3 | 5.8 |

[Table 6]

| | | | | | Comparative example | | | | |
|---|---|---|---|---|---|---|---|---|---|
| | | | | | EC2-1 | EC2-2 | EC2-3 | EC2-4 | EC2-5 |
| Methacrylic resin composition | | | | | RC1 | RC2 | RC3 | RC4 | RC5 |
| Mixing composition | | | Refractive index n | Amount (ppm) of (D) in (AD) or (AC) | | | | | |
| | DDS-added methacrylic Copolymer (AD) | AD-11 | 1.518 | 800 | | | 45 | | |
| | Methacrylic copolymer (AC) | AC-17 | 1.518 | 0 | | | | 30 | |
| | | AC-18 | 1.517 | 0 | | | | | 82 |
| | Graft copolymer (B) | B-1 | 1.518 | | 25 | | 55 | 18 | |
| | | B-2 | 1.518 | | | 20 | | | 18 |
| | | B-3 | 1.540 | | | | | | |
| | Methacrylic copolymer (C) | C-1 | 1.517 | | 75 | | | | |
| | | C-2 | 1.520 | | | 80 | | 52 | |
| | Amount of organic disulfide compound (D) in methacrylic resin composition | | | ppm | 0 | 0 | 310 | 0 | 0 |
| Physical property evaluation result | | | | | | | | | |
| | nm | | | - | 1.517 | 1.520 | 1.518 | 1.519 | 1.517 |
| | \|nb-nm\| | | | - | 0.001 | 0.002 | 0.000 | 0.001 | 0.000 |
| | Haze | | | % | 5 | 6 | 3 | 2 | 3 |
| | HDT | | | °C | 84 | 84 | 59 | 84 | 106 |
| | Pencil hardness (load 500 g) | | | - | 2B | B | 5B | HB | F |
| | Charpy impact strength (notched test piece) | | 23°C | kJ/m2 | 11.6 | 6.9 | 21.0 | 7.5 | 3.5 |
| | | | -30°C | kJ/m2 | 5.8 | 3.8 | 9.1 | 3.1 | 2.1 |

[Summary of Results

Each of the DDS-added methacrylic copolymers (AD) obtained in Examples E2-11 to E2-16 contained an appropriate amount of organic disulfide compound (D), and were excellent in heat resistance, heat decomposition resistance (thermal stability), surface hardness, and impact resistance at room temperatures.

In each of Examples E2-1 to E2-9, a methacrylic resin composition containing 10 to 95 mass% of a DDS-added methacrylic copolymer (AD) containing a first methacrylic copolymer (A) and an organic disulfide compound (D), 5 to 40 mass% of a graft copolymer (B), 0 to 85 mass% of a methacrylic copolymer (C), and 1 to 1,000 ppm of an organic disulfide compound (D) was obtained.

Since each of the methacrylic resin compositions obtained in these examples contained a DDS-added methacrylic copolymer (AD) having the above-described characteristics, they were excellent in heat resistance, surface hardness, and impact resistance at room temperatures.

It is considered that each of the methacrylic resin compositions obtained in these examples contained an appropriate amount of organic disulfide compound (D), so that the thermal decomposition of the first methacrylic copolymer (A), and the second methacrylic copolymer (C), which could be contained as an optional component, was suppressed, and the heat resistance and the heat decomposition resistance (thermal stability) were thereby improved.

Each of the methacrylic resin compositions obtained in these examples contained an appropriate amount of organic disulfide compound (D), so that the gelation of the graft copolymer (B) during the manufacturing of the methacrylic

resin composition and a molded article made thereof was suppressed. As a result, all of the obtained methacrylic resin compositions had excellent impact resistance at low temperatures (below freezing).

In each of the methacrylic resin compositions obtained in these examples, the refractive index difference ($|n_b-n_m|$, $\Delta n$) between the matrix resin consisting of the first methacrylic copolymer (A) and the second methacrylic copolymer (C), which could be contained as an optional component, and the rubber component consisting of the graft copolymer (B) was 0.01 or lower. The methacrylic resin compositions obtained in these examples had excellent transparency because light scattering at the boundary between the matrix resin and the rubber component was reduced.

In each of Comparative Examples EC2-1 and EC2-2, a methacrylic resin composition containing neither the first methacrylic copolymer (A) nor the organic disulfide compound (D) was obtained. The methacrylic resin compositions obtained in these comparative examples had low heat resistance and low surface hardness. The methacrylic resin composition obtained in Comparative Example EC2-2 also had low impact resistance at low temperatures.

In Comparative Example EC2-3, a methacrylic resin composition containing more than 40 mass% of the graft copolymer (B) was obtained. The obtained methacrylic resin composition had low heat resistance and low surface hardness.

The methacrylic copolymer (AC-17) for comparison obtained in Comparative Example EC2-17 had low heat decomposition resistance because no organic disulfide compound (D) was added to the polymerization raw material.

In Comparative Example EC2-4, a methacrylic resin composition containing the methacrylic copolymer (AC-17) for comparison and not containing an organic disulfide compound (D) was obtained. The obtained methacrylic resin composition had low heat resistance and low impact resistance at low temperatures.

The methacrylic copolymer (AC-18) for comparison obtained in Comparative Example EC2-18 had improved heat resistance by increasing the content of maleimide unit, but had low impact resistance.

In Comparative Example EC2-5, a methacrylic resin composition containing the methacrylic copolymer (AC-18) for comparison and not containing an organic disulfide compound (D) was obtained. The obtained methacrylic resin composition had low impact resistance at normal temperatures and low temperatures.

The present invention is not limited to the above-described embodiments and examples, and they can be modified as appropriate without departing from the scope and spirit of the invention.

This application is based upon and claims the benefit of priorities from Japanese patent application No. 2023-100520, filed on June 20, 2023, and Japanese Patent Application No. 2023-138673, filed on August 29, 2023, the disclosures of which are incorporated herein in their entirety by reference.

## Claims

**1.** A methacrylic resin composition containing a first methacrylic copolymer (A) consisting of 10 to 99 mass% of a methyl methacrylate unit, 1 to 40 mass% of at least one type of isopropenyl aromatic compound unit (UI), and 0 to 60 mass% of at least one type of other unit (UO), and having a glass transition temperature of 120 to 150°C,

further containing 1 to 1,000 ppm of at least one type of organic disulfide compound (D), wherein
a total remaining amount of raw material monomers of the methacrylic copolymer (A) is 0 to 1.00 mass%.

**2.** The methacrylic resin composition according to claim 1, containing:

10 to 95 mass% of a first methacrylic copolymer (A) consisting of 10 to 99 mass% of a methyl methacrylate unit, 1 to 40 mass% of at least one type of isopropenyl aromatic compound unit (UI), and 0 to 60 mass% of at least one type of other units (UO), and having a glass transition temperature of 120 to 150°C;
5 to 40 mass% of a graft copolymer (B) obtained by graft-copolymerizing a methacrylic copolymer (M) containing 10 to 90 mass% of a methyl methacrylate unit, 90 to 10 mass% of an aromatic vinyl compound unit, and 49 to 0 mass% of a vinyl cyanide compound unit onto a butadiene-based rubber-like polymer (BR) containing 60 to 100 mass% of a butadiene unit;
0 to 85 mass% of a second methacrylic copolymer (C) containing 10 to 90 mass% of a methyl methacrylate unit, 70 to 10 mass% of an aromatic vinyl compound unit other than the isopropenyl aromatic compound unit, and 49 to 0 mass% of a vinyl cyanide compound unit; and
1 to 1,000 ppm of an organic disulfide compound (D), wherein
the methacrylic resin composition satisfies shown below Formula (1),

$$0 \leq |n_b - n_m| \leq 0.01 \cdots (1)$$

in the above-shown formula, $n_m$ is defined by shown below Formula (2),

$$n_m = (n_a \times w_a + n_c \times w_c)/(w_a + w_c) \cdots (2)$$

in the above-shown formula, $n_a$, $n_b$, and $n_c$ are refractive indices of the first methacrylic copolymer (A), the graft copolymer (B), and the second methacrylic copolymer (C), respectively, for a sodium D line at 23°C, and $w_a$, $w_b$, and $w_c$ are ratios of masses of the first methacrylic copolymer (A), the graft copolymer (B), and the second methacrylic copolymer (C), respectively, to a total mass of the first methacrylic copolymer (A), the graft copolymer (B), and the second methacrylic copolymer (C) in the methacrylic resin composition,

$$\text{where } w_a + w_b + w_c = 1.$$

**3.** The methacrylic resin composition according to claim 1, wherein the at least one type of isopropenyl aromatic compound unit (UI) includes an $\alpha$-methylstyrene unit.

**4.** The methacrylic resin composition according to claim 1, wherein the first methacrylic copolymer (A) contains, as the other unit (UO), an aromatic vinyl compound unit other than the isopropenyl aromatic compound unit.

**5.** The methacrylic resin composition according to claim 1, wherein the first methacrylic copolymer (A) contains, as the other unit (UO), at least one type of ring structure unit (UR) selected from the group consisting of an acid anhydride unit, an imide unit having a ring structure, and a lactone ring unit.

**6.** The methacrylic resin composition according to claim 2, wherein the butadiene-based rubber-like polymer (BR) is at least one type of rubber-like polymer selected from the group consisting of polybutanediene, a copolymer containing a butadiene unit and an aromatic vinyl compound unit, and hydrogen additives thereof.

**7.** The methacrylic resin composition according to claim 2, wherein the graft copolymer (B) is core shell-type graft copolymer particles in which surfaces of at least some of core particles made of the butadiene-based rubber-like polymer (BR) are coated with a shell layer made of the methacrylic copolymer (M).

**8.** The methacrylic resin composition according to claim 1, wherein the at least one type of organic disulfide compound (D) includes at least one type selected from the group consisting of di-tert-dodecyl disulfide (DDS) and dibenzyl disulfide (DBS).

**9.** The methacrylic resin composition according to claim 1, further containing 0.0001 to 1.0 mass% of at least one type of organophosphate compound (P).

**10.** The methacrylic resin composition according to claim 1, further containing 1,000 to 5,000 ppm of at least one type of lubricant (L).

**11.** The methacrylic resin composition according to claim 1, wherein a haze value of a 3 mm thick plate made of the methacrylic resin composition measured in accordance with JIS K7136 is 0 to 10%.

**12.** The methacrylic resin composition according to claim 1, wherein 1% thermal weight loss temperature measured by performing a thermogravimetric analysis under an inert gas atmosphere is 270°C or higher.

**13.** A method for manufacturing a methacrylic resin composition according to any one of claims 1 to 12, comprising:

a step (S1-1) of preparing a polymerization raw material containing a plurality of types of raw material monomers including methyl methacrylate and at least one type of isopropenyl aromatic compound (I), and a polymerization initiator;
a step (S1-2) of polymerizing the polymerization raw material under a condition that a polymerization conversion rate is 30 to 60 mass%, and thereby obtaining a resin solution containing a first methacrylic copolymer (A) or a precursor resin thereof; and
a step (S1-3) of volatilizing and removing at least a part of the raw material monomers present in the resin solution in one step or over a plurality of steps, wherein
at least one type of organic disulfide compound (D) is added to at least one of the polymerization raw material, the

resin solution obtained after completion of the step (S1-2), and the resin solution for which the step (S1-3) is being performed so that the at least one type of organic disulfide compound (D) is present in an amount of 1 to 1,000 ppm in the finally-obtained methacrylic resin composition.

**14.** The method for manufacturing a methacrylic resin composition according to claim 13, wherein the at least one type of organic disulfide compound (D) is added at least to the polymerization raw material, among the polymerization raw material, the resin solution obtained after completion of the step (S1-2), and the resin solution for which the step (S1-3) is being performed.

**15.** A molded article containing a methacrylic resin composition according to any one of claims 1 to 12.

**INTERNATIONAL SEARCH REPORT**

International application No. **PCT/JP2024/021639**

**A. CLASSIFICATION OF SUBJECT MATTER**

***C08L 33/12***(2006.01)i; ***C08F 212/08***(2006.01)i; ***C08F 220/18***(2006.01)i; ***C08K 5/49***(2006.01)i; ***C08K 5/372***(2006.01)i; ***C08L 25/14***(2006.01)i; ***C08L 51/00***(2006.01)i
FI: C08L33/12; C08F220/18; C08F212/08; C08K5/372; C08K5/49; C08L25/14; C08L51/00

According to International Patent Classification (IPC) or to both national classification and IPC

**B. FIELDS SEARCHED**

Minimum documentation searched (classification system followed by classification symbols)

C08L33/12; C08F212/08; C08F220/18; C08K5/49; C08K5/372; C08L25/14; C08L51/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2022-102178 A (KURARAY CO., LTD.) 07 July 2022 (2022-07-07) claims, paragraphs [0007], [0054], [0131]-[0132], [0134], [0140], [0145], [0185], [0193], [0196], [0205], [0223]-[0225] | 1-15 |
| Y | JP 51-036258 A (ROHM AND HAAS COMPANY) 27 March 1976 (1976-03-27) claims 1-3, p. 2, upper right column, lines 16-18, tables V, example 5 | 1-15 |
| A | JP 2005-325195 A (SUMITOMO CHEMICAL COMPANY, LIMITED) 24 November 2005 (2005-11-24) entire text | 1-15 |
| A | JP 2005-263902 A (TORAY INDUSTRIES, INC.) 29 September 2005 (2005-09-29) entire text | 1-15 |
| A | WO 2021/100738 A1 (KURARAY CO., LTD.) 27 May 2021 (2021-05-27) entire text | 1-15 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **31 July 2024** | **13 August 2024** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (July 2022)

**INTERNATIONAL SEARCH REPORT**

International application No.
**PCT/JP2024/021639**

**C. DOCUMENTS CONSIDERED TO BE RELEVANT**

| Category* | Citation of document, with indication, where appropriate, of the relevant passages | Relevant to claim No. |
|---|---|---|
| A | WO 2012/111587 A1 (TORAY INDUSTRIES, INC.) 23 August 2012 (2012-08-23) entire text | 1-15 |

Form PCT/ISA/210 (second sheet) (July 2022)

**INTERNATIONAL SEARCH REPORT**
**Information on patent family members**

International application No.
**PCT/JP2024/021639**

| Patent document cited in search report | Publication date (day/month/year) | Patent family member(s) | Publication date (day/month/year) |
|---|---|---|---|
| JP 2022-102178 A | 07 July 2022 | (Family: none) | |
| JP 51-036258 A | 27 March 1976 | US 3978022 A<br>claims 1-3, 1, lines 55-57, table 5, example 5 | |
| JP 2005-325195 A | 24 November 2005 | (Family: none) | |
| JP 2005-263902 A | 29 September 2005 | (Family: none) | |
| WO 2021/100738 A1 | 27 May 2021 | US 2022/0403145 A1<br>entire text<br>EP 4063417 A1<br>CN 114641525 A | |
| WO 2012/111587 A1 | 23 August 2012 | US 2013/0310502 A1<br>entire text<br>EP 2676996 A1<br>CN 102906184 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H4218515 A
- JP H3281648 A
- JP H7292202 A
- JP H6345932 A
- JP H5279547 A
- JP 2001294722 A
- JP 2013104042 A
- WO 2005108438 A
- JP 2010254742 A
- JP 2008273140 A
- JP 2008274187 A
- JP S61026924 B
- JP H7042332 B
- JP H9100322 B
- JP 2001329021 A
- JP 2000230016 A
- JP 2001151814 A
- JP 2002120326 A
- JP 2002254544 A
- JP 2005146084 A
- JP 2007197703 A
- JP 2010096919 A
- JP H7324153 A
- JP 2023100520 A
- JP 2023138673 A